# EUROPEAN PATENT APPLICATION

(11) **EP 4 767 805 A1**
(43) Date of publication of application: **01.07.2026**
(21) Application number: 24855734.0
(22) Date of filing: 16.08.2024
(51) Int. Cl.: A01D 34/00, A01D 75/18, G05D 1/00, A01D 75/00, H01R 13/02, H01R 13/26, H02J 7/00

(54) **CHARGING COUPLER, GARDEN TOOL, CONTROL METHOD. AND METHOD FOR MOUNTING EXCITER ASSEMBLY**

(30) Priority: 22.08.2023 CN 202322274779 U; 23.11.2023 CN 202311575817
(71) Applicant: Greenworks (Jiangsu) Co., Ltd, Changzhou, Jiangsu 213023 (CN)
(72) Inventor: BERGSTRÖM, Jonas, hangzhou, Jiangsu 213023 (CN); MUSTEDANAGIC, Amir, hangzhou, Jiangsu 213023 (CN); LUNDKVIST, André, hangzhou, Jiangsu 213023 (CN); STRANDBERG, Stefan, hangzhou, Jiangsu 213023 (CN); ABRAHAMSSON, Oscar, hangzhou, Jiangsu 213023 (CN); ALZÉN, Jimmy, hangzhou, Jiangsu 213023 (CN); JONSSON, Henrik, hangzhou, Jiangsu 213023 (CN); CORTES, Adrian, hangzhou, Jiangsu 213023 (CN)
(74) Representative: Bergenstråhle & Partners AB
(86) International application number: PCT/CN2024/112651
(87) International publication number: WO 2025/040010

(57) **Abstract**

A control method of the garden tool includes: controlling the garden tool to travel along a preset path in a working area, detecting an obstacle in a moving direction of the garden tool; obtaining a speed of the obstacle; controlling the garden tool to stop at a preset distance from the obstacle when the speed of the obstacle is greater than 0; continuing detection of the obstacle in the moving direction of the garden tool; and controlling to resume movement of the garden tool to continue to travel along the preset path when a preset event is detected within a preset time. With the disclosure, when a movable obstacle is encountered during a mowing operation of the garden tool, an original traveling path is not changed as much as possible, thereby keeping a mowing texture of a lawn consistent as much as possible and improving an aesthetics of the lawn.

## Description

### TECHNICAL FIELD

This disclosure relates to a field of garden tools, and in particular, to a charging coupler, a garden tool, a control method thereof and a method of mounting an exciter assembly.

### BACKGROUND

With the continuous improvement of people's living standards, people have higher and higher requirements for leisure environments, and private garden, park, playground and other places have become the best places for people's leisure and entertainment, however, private garden, park, playground and other grasslands need to be irregularly trimmed to ensure aesthetics. Currently, mowers are usually used instead of manual trimming.

Conventional charging devices for robotic garden tools use metal electrical connectors, through which current is conducted to charge the battery of the tool. However, since robotic garden tools are outdoor tools, and charging stations are also located outdoors, the metal connectors are prone to oxidation and corrosion. The oxides can lead to heat buildup during charging, affecting charging efficiency. Furthermore, the oxides can cause poor connection between the robotic garden tool and the charging device.

In addition, conventional mowers are usually mounted with speakers. To ensure that the speaker sound is clear, the general mounting method is to provide a hole in the housing and align the cone-shaped horn of the speaker with the hole to transmit the sound. This mounting method firstly reduces the strength of the housing, and secondly, it requires care to avoid blocking the hole during the design process. Furthermore, it makes the mower susceptible to incomplete sealing, which may allow moisture to enter the housing, reducing the stability of the mower and thus shortening the duration life of the mower.

A mower often encounters various different obstacles during work, and a conventional robotic mower may detect obstacle by using a detection assembly arranged on the robotic mower, and then mow after bypassing an area in which the obstacle is located. When the obstacle disappears from the area, the area where the obstacle is located will form a missed mowing area, and the mower needs to be controlled to return to the missed mowing area for a supplementary mowing subsequently, which will not only cause the mowing time and mowing direction of the missed mowing area to be inconsistent with the surrounding area, thereby causing the mowing texture in the area where the obstacle is located to be inconsistent with the surrounding area, affecting the aesthetics of the entire lawn, but also increasing the entire operation time.

### SUMMARY

**The** disclosure provides a garden tool and a control method of the garden tool, which are used to keep an original path of the garden tool unchanged as much as possible when encountering a movable obstacle during mowing, thereby keeping a mowing texture of a lawn consistent as much as possible and improving an aesthetics of the lawn.

**One** or more embodiments of the disclosure provide a control method of the garden tool, which includes operations as follows.

The garden tool is controlled to move along a preset path within a working area.

**An** obstacle is detected in a moving direction of the garden tool.

A speed of the obstacle is obtained.

The garden tool is controlled to stop at a preset distance from the obstacle when the speed of the obstacle is greater than zero.

A continuing detection of the obstacle is performed in the moving direction of the garden tool.

The garden tool is controlled to move along the preset path when a preset event is detected within a preset time.

In an embodiment of the disclosure, the preset event includes the obstacle moving to a first position, and the first position is not on a remaining portion of the preset path.

In an embodiment of the disclosure, the control method of the garden tool further includes determining whether the obstacle is located within the working area when the obstacle is detected, when the obstacle is located within the working area, obtaining the speed of the obstacle, and when the obstacle is located outside the working area, ignoring the obstacle.

In an embodiment of the disclosure, the control method of the garden tool further includes detecting a distance between the garden tool and the obstacle when the obstacle is detected and determining whether the obstacle is located within the working area based on a positioning of the garden tool, the moving direction, the distance between the garden tool and the obstacle, and a boundary of the working area.

In an embodiment of the disclosure, the control method of the garden tool further includes operations as follows.

**lf** the preset event is not detected within the preset time, the garden tool is controlled to bypass the obstacle.

The garden tool is controlled to return to the preset path and travel along the preset path.

In an embodiment of the disclosure, when the garden tool bypasses the obstacle, the obstacle is not collided.

In an embodiment of the disclosure, the control method of the garden tool further includes operations as follows.

When the speed of the obstacle is zero, the speed of the garden tool is reduced.

The obstacle is collided.

The obstacle is bypassed.

The garden tool is controlled to return to the preset path.

In an embodiment of the disclosure, after the garden tool collides with the obstacle, the garden tool stops steering.

In an embodiment of the disclosure, the control method of the garden tool further includes operations as follows.

The garden tool is controlled to decelerate and collide with the obstacle.

After colliding with the obstacle, the garden tool is controlled to make an arc-shaped movement to bypass the obstacle.

In an embodiment of the disclosure, the garden tool includes a detection assembly for detecting obstacles, and the detection assembly includes one or a combination of a visual detection assembly, a radar detection assembly, an ultrasonic detection assembly, and an infrared detection assembly.

In an embodiment of the disclosure, the garden tool is a mower.

One or more embodiments of the disclosure provide the garden tool, which includes a main body, a walking assembly, a detection assembly and a control unit.

The walking assembly is mounted on a bottom portion of the main body.

The detection assembly is mounted on the main body. The detection assembly is configured to detect an obstacle in a moving direction of the garden tool, a distance between the obstacle and the garden tool and a speed of the obstacle
The control unit is electrically coupled to the walking assembly and the detection assembly.

The control unit is configured to:
control the garden tool to move along a preset path within a defined working area, and receive a detection result of the detection assembly;
stop the garden tool when the obstacle is within a preset distance;
continue detection of the obstacle; and
control the garden tool to resume movement along the preset path when a preset event is detected within a preset time.

In an embodiment of the disclosure, the garden tool further includes a storage unit, configured to store a working area map and a control program of the garden tool.

In an embodiment of the disclosure, the garden tool further includes a path planning unit, configured to plan a path based on the working area map of the garden tool.

In an embodiment of the disclosure, the detection assembly includes one or a combination of a visual detection assembly, a radar detection assembly, an ultrasonic detection assembly, and an infrared detection assembly.

In an embodiment of the disclosure, the main body includes a housing defining a mounting surface, and an exciter assembly mounted within the mounting surface.

Wherein, the exciter assembly includes an audio exciter, a connecting component, and a fixing bracket. The connecting component is arranged between the audio exciter and the mounting surface to fix the audio exciter on the garden tool.

The fixing bracket covers an outer side of the audio exciter and restrains movement of the audio exciter relative to the mounting surface.

In an embodiment of the disclosure, the audio exciter includes an oscillating body and a base plate, the base plate being is mounted to the housing through the connecting component, and the oscillating body is configured to drive vibration of the base plate to cause vibration of the housing and emission of sound.

In an embodiment of the disclosure, the audio exciter further includes a neck body fixedly connecting the oscillating body and the base plate, and the fixing bracket includes an accommodating cavity receiving the oscillating body and an abutment plate abutting against the base plate.

In an embodiment of the disclosure, the fixing bracket includes an opening in communication with the accommodating cavity, and the opening is configured for the oscillating body to pass through.

In an embodiment of the disclosure, the fixing bracket further includes an accommodating opening enclosed by the abutment plate, the accommodating opening is configured for the neck part to pass through, the accommodating opening is in communication with the opening and respectively arranged on two adjacent side surfaces of the fixing bracket.

**In** an embodiment of the disclosure, the accommodating cavity defines an accommodating groove, the oscillating body includes a protruding part received in the accommodating groove, and in an axial direction of the oscillating body, a thickness of the protruding part is less than a thickness of the accommodating cavity to allow a movement of the protruding part in the accommodating cavity.

In an embodiment of the disclosure, the accommodating groove defines a positioning groove, the protruding part includes received in the positioning groove, when the oscillating body is accommodated in the accommodating cavity, the positioning block is accommodated in the positioning groove to achieve a positioning connection between the audio exciter and the fixing bracket.

In an embodiment of the disclosure, a limiting block and a protruding block are arranged on a side of the abutment plate facing the bottom plate, when the abutment plate abuts against the bottom plate, the limiting block and the protruding block respectively abut against a side edge of the bottom plate, to form a limiting connection between the audio exciter and the fixing bracket.

In an embodiment of the disclosure, the connecting component is a double-sided tape.

In an embodiment of the disclosure, the fixing bracket further includes an accommodating part and a connecting part, the accommodating part is configured to accommodate a part of the audio exciter and restrain the audio exciter to the mounting surface, the housing includes a fixing post, the connecting part is coupled to the fixing post to couple the fixing bracket to the housing.

In an embodiment of the disclosure, the connecting part includes a guiding groove, the fixing post extends into the guiding groove and is movable in the guiding groove, so as to enable the fixing bracket to move relative to the housing.

**One** or more embodiments of the disclosure provide a method to mount an exciter assembly on a garden tool, which includes operations as follows.

In S1, a connecting component, an audio exciter and a fixing bracket are assembled together to form the exciter assembly.

In S2, the exciter assembly is moved into a garden tool, and the exciter assembly is positioned at a same height as the mounting surface and relative to the mounting surface.

In S3, the exciter assembly is pushed to move towards the mounting surface, and the audio exciter is fixed on the mounting surface in the garden tool through the connecting component.

**In** S4, the fixing bracket is fixed with the garden tool.

In an embodiment of the disclosure, in S1, the audio exciter is inserted into the accommodating cavity through the opening of the fixing bracket until the neck part is accommodated in the accommodating opening and the abutment plate is attached to the bottom plate, and then the fixing bracket is pushed to slide relative to the oscillating body to enable the abutment plate to be deformed until the limiting blocks and the protruding blocks are respectively abutted against a side edge of the bottom plate.

In an embodiment of the disclosure, in S4, the connecting component is a double-sided tape, and the audio exciter is bonded to the mounting surface through the double-sided tape.

**One** or more embodiments of the disclosure provide a charging coupler configured to couple a robotic garden tool to a charging device. The charging coupler includes a charging assembly and a mating assembly, the charging assembly and the mating assembly being configured to establish an electrical charging connection between the charging assembly and the mating assembly in response to the robotic garden tool moving on the charging device,, wherein each of the charging assembly and the mating assembly includes at least one first charging terminal and at least one second charging terminal electrically mateable with each other, the first charging terminal includes at least one conductive protrusion formed through extending from the first charging terminal to an outer side of the charging assembly.

In an embodiment of the disclosure, the at least one conductive protrusion is formed through bending an end part of the first charging terminal.

In an embodiment of the disclosure, two conductive protrusions are arranged on the first charging terminal, and the two conductive protrusions are arranged in parallel or symmetrically.

In an embodiment of the disclosure, the first charging terminal includes a head, a neck, and a tail, the neck is arranged between the head and the tail, and the conductive protrusion extends in a direction perpendicular to a surface of the neck.

In an embodiment of the disclosure, the head includes a guiding slope, the guiding slope is configured to guide coupling of the first charging terminal and the second charging terminal, and a buckling part is formed on the head.

In an embodiment of the disclosure, the tail includes a mounting part, and the mounting part is configured to fixedly mount the first charging terminal on the charging assemble.

In an embodiment of the disclosure, the charging assembly is arranged on the charging device, and the mating assembly is arranged on the robotic garden tool.

In an embodiment of the disclosure, each first charging terminal includes at least one electrical contact point when coupled and in contact with the corresponding second charging terminal.

In an embodiment of the disclosure, the charging coupler includes two symmetrical first charging terminals and two symmetrical second charging terminals.

In an embodiment of the disclosure, the second charging terminal is flexible and two the second charging terminals defines a channel, the channel includes a first end and a second end, a width of the first end is greater than a distance between two first charging terminals, and a width of the second end is smaller than a distance between two adjacent first charging terminals.

The disclosure further provides a control method of the garden tool, and the control method includes operations as follows. The walking assembly is controlled to move the garden tool along a preset path within a working area by the control unit. The walking assembly is controlled to stop the garden tool at a preset distance from the obstacle when the speed of the obstacle is greater than zero. A continuing detection of the obstacle is performed by the detection assembly. The walking assembly is controlled to resume movement of the garden tool along the preset path when a preset event is detected within a preset time.

In an embodiment of the disclosure, the preset event includes at least one of:
the obstacle being removed from the moving direction of the garden tool,
the obstacle being detected at a distance greater than the preset distance,
or the speed of the obstacle being detected as zero or below a predefined threshold for a continuous period of time and the obstacle being not on the preset path of the garden tool.

In an embodiment of the disclosure, the preset time is a time period measured from when the garden tool is stopped due to detection of the obstacle.

In an embodiment of the disclosure, the preset distance is determined based on at least one of a moving speed of the garden tool, a response time of the control unit, and a detection accuracy of the detection assembly.

In an embodiment of the disclosure, continuing detection of the obstacle includes repeatedly detecting the obstacle at a predetermined sampling interval.

In an embodiment of the disclosure, the working area is defined by at least one of a boundary wire, a stored map, or positioning data such as GNSS-based coordinates, RTK positioning data, or stored geographic boundary data.

In an embodiment of the disclosure, stopping the garden tool at the preset distance reduces a risk of collision between the garden tool and the obstacle.

In an embodiment of the disclosure, the control method is executed by the control method of the garden tool.

The disclosure provides a garden tool and a control method thereof. The control method of the garden tool includes: controlling the garden tool to travel along a preset path in a working area, detecting an obstacle in a moving direction of the garden tool; obtaining a speed of the obstacle; controlling the garden tool to stop at a preset distance from the obstacle when the speed of the obstacle is greater than 0; continuing detection of the obstacle in the moving direction of the garden tool; and controlling to resume movement of the garden tool to continue to travel along the preset path when a preset event is detected within a preset time. With the disclosure, when a movable obstacle is encountered during a mowing operation of the garden tool, an original traveling path is not changed as much as possible, thereby keeping a mowing texture of a lawn consistent as much as possible and improving an aesthetics of the lawn.

The mower of the disclosure can emit sound through arranging a vibrating exciter assembly inside. The audio exciter and the mower are connected by the connecting component, which avoids a need for opening a hole on the mower and improves a sealing performance of the mower. In addition, through arranging a fixing bracket covering the outer side of the audio exciter, a connection stability between the audio exciter and the mower is improved, which further extends a duration life of the audio exciter.

Compared with the conventional art, the charging coupler of the disclosure has a simple structure. Through arranging at least one conductive protrusion on the first charging terminal, and the conductive protrusion extending outward from the first charging terminal toward the charging assembly, when the first charging terminal is coupled to the second charging terminal, the conductive protrusion contacts the second charging terminal first and scrapes the surface of the second charging terminal, which reduces corrosion on the second charging terminal and improves the electrical connection effect.

### BRIEF DESCRIPTION OF THE DRAWINGS

FIG. 1 is a schematic view of an RTK differential positioning method.
FIG. 2 is a structural block view of a garden tool of the disclosure.
FIG. 3 is a schematic flowchart of a control method of a garden tool of the disclosure.
**FIG.** 4 is a schematic view of a garden tool traveling along a preset path and detecting an obstacle.
FIG. 5 is a schematic view of a garden tool stopping at a preset distance from an obstacle.
FIG. 6 illustrates a scenario where an obstacle is removed to completely clear a garden tool's preset path, allowing the garden tool to proceed without altering an original travel path of the garden tool.
FIG. 7 illustrates a scenario where an obstacle is removed but does not fully clear the garden tool's preset path, requiring the garden tool to bypass it and thus altering an original travel path of the garden tool.
FIG. 8 is a schematic structural view of a garden tool and a charging station according to at least one embodiment of the disclosure.
FIG. 9 is a perspective structural view of a first charging terminal according to at least one embodiment of the disclosure.
FIG. 10 is a perspective structural view of FIG. 9 from another angle.
FIG. 11 is a perspective view of a charging assembly in a charging coupling assembly according to at least one embodiment of the disclosure.
FIG. 12 is an exploded structural view of FIG. 11.
FIG. 13 is a partial exploded structural view of FIG. 12.
**FIG.** 14 is a perspective view of a mating assembly in a charging coupling assembly according to at least one embodiment of the disclosure.
FIG. 15 is a perspective schematic view of a mower according to at least one embodiment of the disclosure.
FIG. 16 is a perspective schematic view of a detection assembly in FIG. 15.
FIG. 17 is an exploded view of a detection assembly in FIG. 16.
FIG. 18 is a perspective schematic view of an exciter assembly in FIG. 16.
FIG. 19 is a partial enlarged view of part A in FIG. 18.
FIG. 20 is a perspective schematic view of an audio exciter in FIG. 16.
FIG. 21 is a perspective schematic view of a fixing bracket in FIG. 16.

### PART NUMBER DESCRIPTION

1, charging coupler; 10, mower; 11, detection module; 101, main body; 102, walking assembly; 12, path planning unit; 13, control unit; 14, storage unit; 15, positioning unit; 20, obstacle; 30, working area; 31, preset path; 32, obstacle avoidance path; 4, charging assembly; 40, first charging terminal; 41, electrical connection surface; 42, head; 421, buckling part; 422, guiding slope; 43, neck; 431, protrusion; 44, tail; 441, mounting part; 45, charger; 451, housing hole; 452, inserting groove; 453, fixing part; 5, mating assembly; 50, second charging terminal; 501, contacting part; 51, channel; 511, opening; 6, housing; 61, mounting surface; 62, accommodating space; 63, locking post; 7, transition component; 71, fixing post; 72, through hole; 8, exciter assembly; 81, connecting component; 82, audio exciter; 821, oscillating body; 822, protruding part; 823, bottom plate; 824, neck part; 825, positioning block; 83, fixing bracket; 84, accommodating part; 841, accommodating cavity; 842, accommodating groove; 843, opening; 844, accommodating opening; 845, abutment plate; 846, protruding block; 847, limiting block; 848, positioning groove; 849, notch; 85, connecting part; 851, connecting hole; 852, guiding groove; 9, locking component.

### DETAILED DESCRIPTION

The embodiments of the disclosure are described below through specific embodiments, and those skilled in the art may easily understand other advantages and effects of the disclosure from content disclosed in the specification. The disclosure may further be implemented or applied through other different specific embodiments, and various details in the disclosure may also be modified or changed based on different viewpoints and applications without departing from the disclosure.

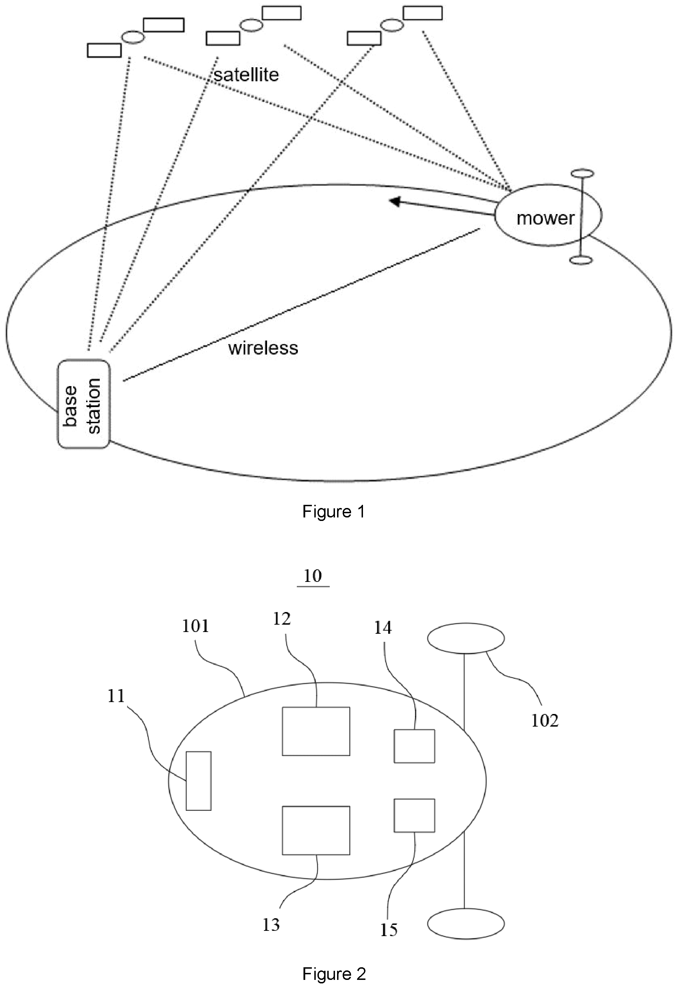

Please refer to FIG. 1 through FIG. 7. It should be noted that the drawings provided in the embodiments only schematically illustrate a basic concept of the disclosure, and thus drawings only show components related to the disclosure and are not drawn according to a number, shape, and size of the components during actual implementation, a type, number, and proportion of each component during actual implementation may be arbitrarily changed, and a component layout type may also be more complex.

Please refer to FIG. 1 through FIG. 7. In this embodiment, a garden tool and a control method thereof of the disclosure will be described in detail in combination with a mower, and the control method and a system of the garden tool in this embodiment may also be applied to other garden tools such as a snow thrower and a sweeper for positioning based on satellite navigation information.

**To** improve positioning precision, the mower usually uses an RTK differential positioning technology or other positioning technologies capable of providing sufficient positional accuracy shown in FIG. 1 for positioning. RTK differential positioning technology is a real-time differential GPS technology based on a carrier phase observation, which includes a reference station receiver, a data link and a mobile station receiver. A carrier reference station receiver and the mobile station receiver continuously monitor a same satellite, and while a mobile station receives and observes a visible satellite signal, the reference station sends a carrier phase measurement value to the mobile station receiver in real time through the data link, and the mobile station receiver processes data on an own carrier phase measurement value of the mobile station receiver and the received carrier phase measurement value in real time to solve own spatial coordinates of the mobile station receiver and complete a high-precision positioning. A positioning accuracy of the carrier phase difference may reach centimeter level. In FIG. 1, a base station serves as the reference station, and the mower serves as the mobile station. Certainly, the mower may alternatively be another mower that can implement accurate positioning.

Please refer to FIG. 2, the mower 10 includes a main body 101, a walking assembly 102, a detection assembly 11, a path planning unit 12, a control unit 13, a storage unit 14, and a positioning unit 15.

Please refer to FIG. 2, the walking assembly 102 is mounted at a bottom portion of the main body 101, and the walking assembly 102 is connected to the control unit 13 and can walk under a control command of the control unit 13 to drive the mower 10 to move forward, backward and turn. In an embodiment, the walking assembly 102 may include, for example, two driving wheels and one turning wheel, the two driving wheels are arranged at a rear of the main body 101, the turning wheel is mounted at a center of a front of the main body 101, and the turning wheel is covered below of the main body 101, so it is not visible in the figure. The walking assembly 102 can enable the mower 10 to walk. It may be understood that a specific form of the walking assembly 102 is not unique, for example, two turning wheels and two driving wheels may also be arranged, or two sets of crawler wheels may be respectively arranged on two sides of the main body 101. Please refer to FIG. 2, the detection assembly 11 is at least mounted at a front end of the main body 101, the detection assembly 11 is connected to the control unit 13, and the detection assembly 11 includes at least one sensor and is configured to detect an obstacle in a forward direction of the mower 10, and the detection assembly 11 may detect information such as a speed of the obstacle and a distance between the obstacle and the garden tool, and send the information to the control unit 13.

In an embodiment, there may be, for example, two groups of the detection assemblies 11, which are respectively arranged at the front end and a rear end of the main body 101 to detect obstacles in the forward direction or a backward direction of the mower 10, and may detect the information such as the speed of the obstacle and the distance between the obstacle and the mower, so a specific form of the detection assembly 11 is not particularly limited. A detection frequency or sampling frequency of the detection assembly 11 may be determined according to a speed and angle of the mower 10. When the speed of the mower 10 is higher or the angle of the mower 10 changes faster, the detection frequency or sampling frequency of the detection assembly 11 is higher, which means that more detection data is obtained in an operation process per unit time.

The detection assembly 11 may be a visual detection assembly, a radar detection assembly, an ultrasonic detection assembly, an infrared detection assembly, or a combination thereof. More accurate detection data may be obtained by combining multiple types of detection assemblies. In order to detect a collision, the detection assembly 11 may further include a collision sensor.

Please refer to FIG. 2, the path planning unit 12 is connected to the control unit 13, the path planning unit 12 is configured to plan a working path of the mower 10 in the working area 30 according to a working area map of the mower 10, the working area is defined by at least one of a boundary wire, a stored map, or positioning data, and for a same working area map, planning may be performed based on different traveling angles and working widths, thereby forming a working area map with different paths. Moreover, the path planning unit 12 may further plan an obstacle avoidance path according to the information of the obstacle, and the mower 10 may bypass the obstacle according to the obstacle avoidance path and return to a preset working path. Wherein, when planning the working path, obstacles in a predetermined working area 30 are avoided. However, unexpected obstacles, such as humans, pets, toys, etc., may appear in the working area 30.

Please refer to FIG. 2, the storage unit 14 is configured to store the working area map and a control program of the mower 10. As an example, the positioning unit 15 may position the mower 10 based on the RTK differential positioning technology shown in FIG. 1.

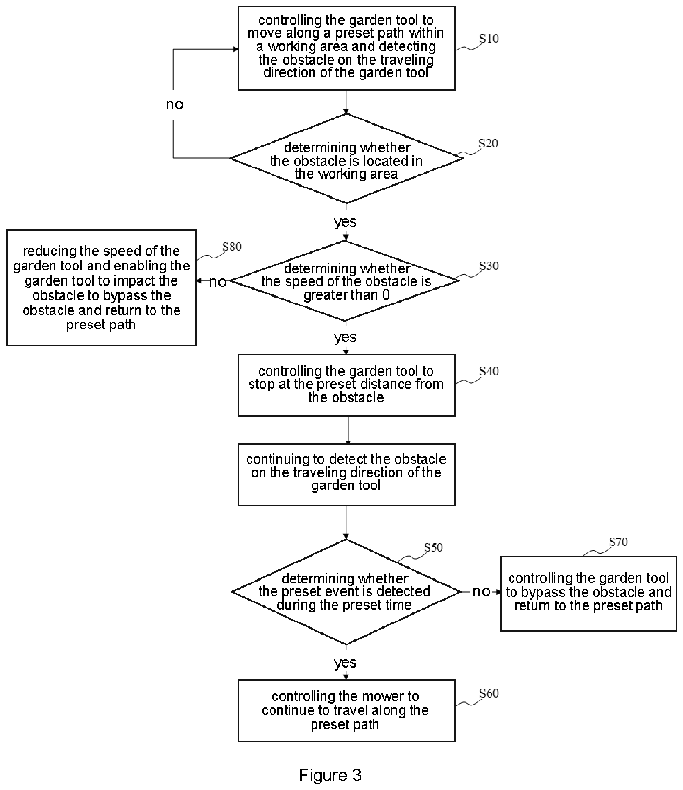

Please refer to FIG. 3, this disclosure provides a control method of the garden tool applied to the mower 10. The control method includes operations S10 to S80 as follows.

In S10, the garden tool is controlled to move along a preset path 31 within a working area 30 and detect the obstacle on the moving direction of the garden tool.

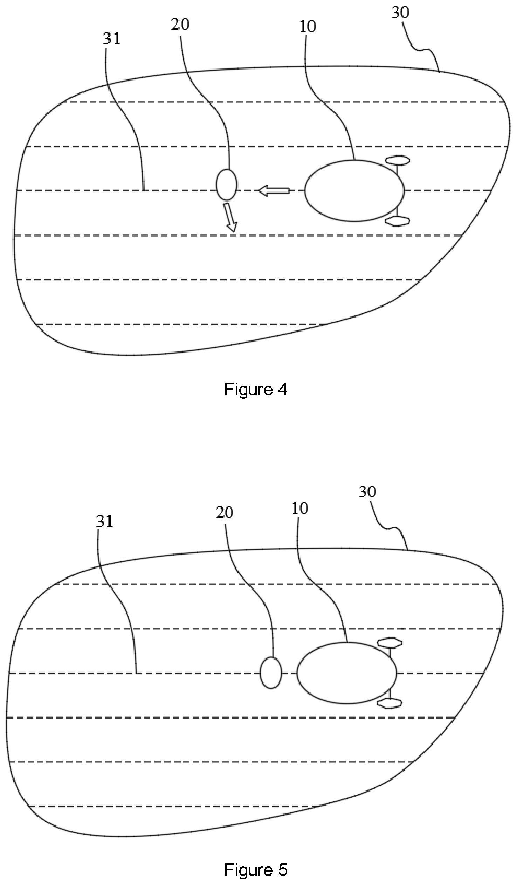

Please refer to FIG. 4, the mower 10 can plan the working path in the working area 30 in advance through a path planning unit 12. When the mower 10 is working, the mower 10 may travel along the pre-planned working path. The preset path 31 is shown as a horizontal dashed line in FIG. 4 through FIG. 7. A relatively simple preset path 31 is shown in the figure, in practical applications, the preset path 31 of the mower 10 needs to be set according to a shape of the working area 30 and a distribution of each building in the working area 30, so there may be a large number of curved paths.

In a process in which the mower 10 travels along the preset path 31, a detection assembly on the mower 10 may detect an area in the moving direction of the mower 10 in real time. The detection frequency or sampling frequency of the detection assembly 11 may be determined according to the speed and angle of the mower 10. When the speed of the mower 10 is higher or the angle of the mower 10 changes faster, the detection frequency or sampling frequency of the detection assembly 11 is higher, which means that more detection data is obtained in the operation process per unit time.

In S20, when it is detected that the obstacle exists in the moving direction of the garden tool, it is also necessary to determine whether the obstacle is located in the working area 30. When the detection assembly 11 detects that the obstacle 20 exists in the moving direction of the mower 10, which means on the preset path 31, and the obstacle 20 is located in the working area 30, the control unit 13 may obtain the speed of the obstacle 20 and a distance between the obstacle 20 and the mower 10 based on detection data of the detection assembly 11. When there is the obstacle 20 in the moving direction of the mower 10, but the obstacle is located outside the working area 30, the obstacle is ignored, and a process returns to S10. Wherein, the speed of the obstacle 20 refers to a speed of the obstacle 20 relative to the ground, and it may be determined whether the obstacle 20 is a moving object or a non-moving object according to the speed of the obstacle 20.

It should be noted that the garden tool only determines the obstacle 20 located in the working area 30, and if the obstacle 20 is located outside the working area 30, even if the garden tool detects the obstacle, the obstacle is ignored. In this way, the obstacle 20 outside the working area 30 may be prevented from interfering with work of the garden tool. A position determination of the obstacle 20 may be determined by detecting the distance of the obstacle relative to the garden tool and comparing a current position of the garden tool with a boundary of the working area 30.

Taking the detection assembly 11 using a visual detection module as an example, the speed of the obstacle 20 and the distance between the obstacle 20 and the mower 10 may be obtained by comparing a motion of points between two frames of images collected by the visual detection module and using a conventional optical flow method or a multi-view pose estimation method based on a basic matrix and a random matrix, which will not be repeated here.

Taking the detection assembly 11 adopting a radar assembly as an example, the distance between the obstacle 20 and the mower 10 may be estimated according to a delay time between a radar emission pulse and an echo pulse, and the speed of the obstacle 20 relative to the ground may be calculated according to a Doppler effect.

In S30, it is determined whether the speed of the obstacle 20 is greater than 0.

When the speed of the obstacle is greater than 0, S40 is performed, the garden tool is controlled to stop at a preset distance from the obstacle.

**When** the speed of the obstacle 20 is equal to 0, the speed of the garden tool is reduced and the garden tool hits the obstacle 20, after hitting the obstacle 20, the garden tool stops and turns, and then the garden tool is controlled to make an arc-shaped motion to bypass the obstacle 20 and return to the preset path to work (S80). The garden tool includes a collision sensor. After the garden tool detects that a collision, the garden tool will retreat by a certain distance and then rotate by a certain angle to continue to move forward, and the garden tool travels along an arc-shaped path to guide the garden tool to return to a planned original path. If the collision occurs again in this process, the above operations are performed again until the garden tool returns to the original planned path.

When the speed of the obstacle 20 is greater than 0, which indicates that the obstacle 20 is a moving object, the mower is controlled to stop at the preset distance from the obstacle 20, and a control plan is executed according to a subsequent movement of the obstacle 20.

**A** moving speed of the moving object is generally non-uniform, and there may be a turning case. Therefore, after it is detected that the obstacle is moving within a predetermined distance, the garden tool stops moving to avoid hitting a pedestrian or a pet. The moving obstacle may move out of the preset path of the mower 10 within a subsequent preset time, so that the mower 10 passes without changing a previous traveling path. The preset time is a time period measured from when the garden tool is stopped due to detection of the obstacle. Please refer to FIG. 5, the mower is controlled to stop at the preset distance from the obstacle 20, and the control plan is executed according to the subsequent movement of the obstacle 20.

The preset distance may be determined based on at least one of a moving speed of the garden tool, a response time of the control unit, a detection accuracy of the detection assembly and the size of the mower 10, and the preset distance may be set to be equivalent to the size of the mower 10, so that when the obstacle 20 does not move on a path that the mower 10 travels without changing a previous traveling path within the preset time, the mower 10 can bypass the obstacle 20 without first colliding with the obstacle 20. As an example, the preset distance is from 30 cm to 100 cm, such as 30 cm, 40 cm, 50 cm, 60 cm, 70 cm, 80 cm, 90 cm, or 100 cm.

In S50, the detection assembly is controlled to continue detecting the obstacle 20 in the moving direction of the garden tool, which includes repeatedly detecting the obstacle at a predetermined sampling interval.

When the mower 10 stops at the preset distance from the obstacle 20, the detection assembly 11 needs to continue to detect the obstacle 20 in the moving direction of the mower 10, and according to the subsequent movement of the obstacle 20, an obstacle avoidance is performed or the mower 10 travels along the previous path after the obstacle 20 moves out of the traveling path.

Specifically, the event that the obstacle 20 moves to a position allows the mower 10 to pass without changing the previous traveling path of the mower may be defined as a preset event, and it is determined whether the preset event is detected within a preset time.

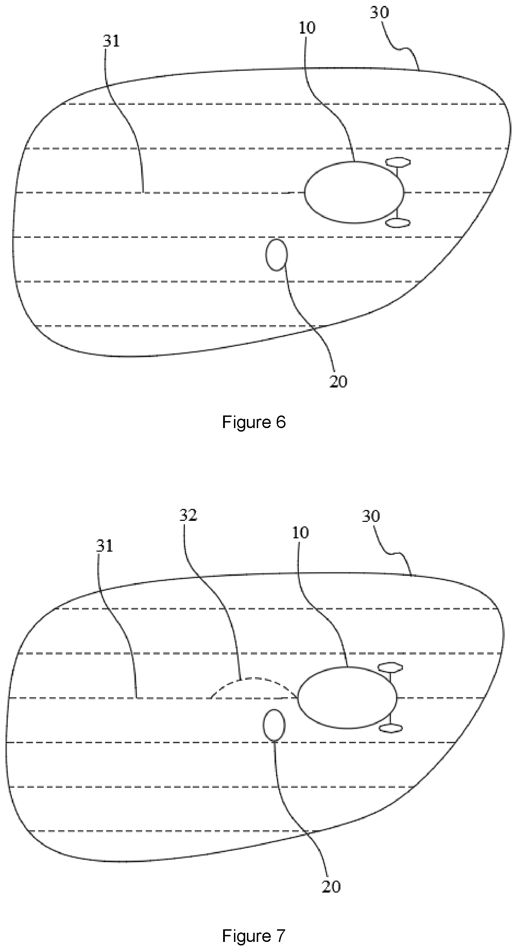

When the preset event is detected within the preset time, which means that when it is detected within the preset time that the obstacle 20 moves to a position where the mower 10 can pass without changing the previous path, please refer to FIG. 6, the mower 10 is controlled to continue to travel along the preset path (S60), thereby avoiding a mowing leakage, which affects a texture consistency of the lawn, and maintaining an aesthetics of the lawn.

It should be noted that, in order to avoid an accident that a pedestrian or a pet suddenly changes the traveling path. When the preset event is detected within the preset time and the garden tool is controlled to continue to travel along the preset path, a traveling speed of the garden tool needs to be less than a normal speed of the garden tool, and after the garden tool travels a specific distance or for a specific time, the traveling speed of the garden tool returns to the normal speed.

When the preset event is not detected within the preset time, which means that when the obstacle 20 does not move to the position where the mower 10 passes without changing the previous path within the preset time, it indicates that the obstacle 20 has stopped moving or the moving speed of the obstacle 20 is very slow, and at this time, if a waiting continues, it will waste time and affect mowing efficiency, so it is necessary to stop waiting, and the mower 10 is controlled to slowly bypass the obstacle 20 along the obstacle avoidance path 32 as shown in FIG. 7. After the mower 10 bypasses the obstacle 20, the mower 10 is controlled to return to the preset path and travel along the preset path (S70). It can be seen that when the obstacle 20 does not move, and the obstacle 20 does not move to a position allowing the mower 10 to pass without changing the previous path within the preset time, the mower 10 will slowly bypass the obstacle 20 in an obstacle avoidance manner, and will not impact the obstacle 20 when bypassing the obstacle 20, which may reduce a damage caused by impacting to organisms (such as people and animals) and improve a safety of the mower 10.

It should be noted that the obstacle avoidance path 32 may be planed according to information such as the position and the size of the mower 10 through the path planning unit 12, so that the mower 10 can return to the preset path after bypassing the obstacle 20 according to the obstacle avoidance path 32 to continue mowing. An area of the obstacle 20 is used as a lawn leakage area, and after the lawn is cut, the mower 10 may return to the lawn leakage area for supplementation.

**It** should be noted that the preset time may be flexibly set according to actual needs and should not be too long, which will affect the mowing efficiency of the mower. The preset time should also not be too short. If the speed of the obstacle 20 is slow, the obstacle 20 cannot completely move within the preset time to the path that the mower 10 passes without changing the previous path. As an example, the preset time is between 5 s and 20 s, such as 5 s, 10 s, 15 s or 20 s.

In an embodiment of the disclosure, the control plan when the obstacle 20 is the non-moving object is as follows. When the obstacle 20 is the non-moving object, the mower 10 will first decelerate and then impact the obstacle 20 to avoid excessive speed which may cause damage to the mower 10. When the collision sensor detects that the obstacle 20 is impacted, the mower 10 may bypass the obstacle 20 by making an arc-shaped motion, and if the obstacle 20 is bypassed, the mower 10 is controlled to return to the preset path to continue working. If the obstacle 20 is not bypassed, the mower 10 continues to make the arc-shaped motion until the obstacle 20 is bypassed. After bypassing the obstacle 20, the area of the obstacle 20 is used as the lawn leakage area, and after the lawn is cut, the mower 10 may return to the lawn leakage area for supplementary cutting. As an example, the speed of the mower 10 may be reduced to below 0.6 m/s, such as 0.2 m/s, 0.3 m/s, 0.4 m/s, 0.5 m/s, 0.6 m/s.

In summary, the disclosure ensures that when the garden tool encounters the movable obstacle during mowing, the original path of the garden tool is maintained as much as possible through controlling the garden tool to travel along a preset path in a working area; detecting an obstacle in a moving direction of the garden tool; obtaining a speed of the obstacle; controlling the garden tool to stop at a preset distance from the obstacle when the speed of the obstacle is greater than 0; continuing to detect the obstacle in the moving direction of the garden tool; and controlling the garden tool to continue to travel along the preset path when a preset event is detected within a preset time, thereby maintaining a mowing texture consistency of the lawn and enhancing the aesthetics of the lawn.

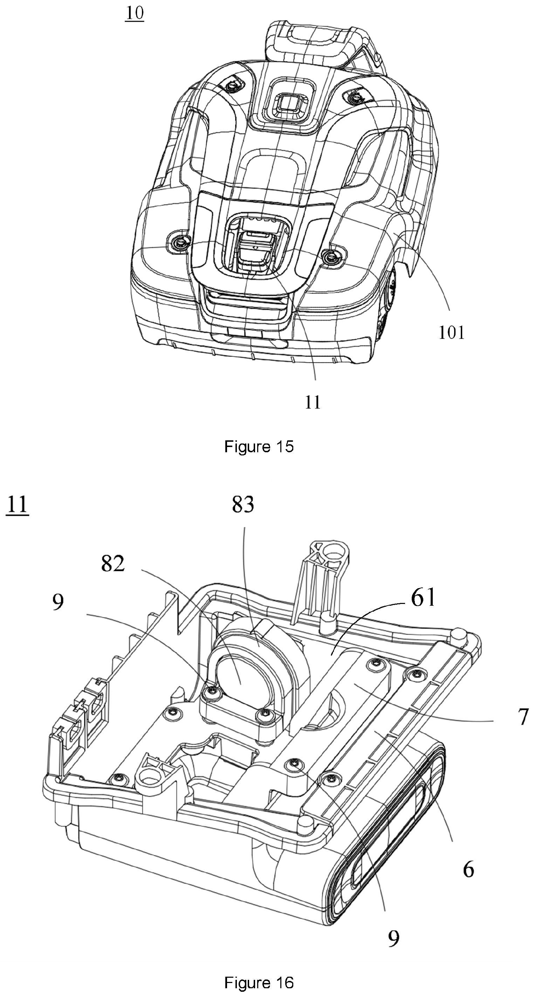

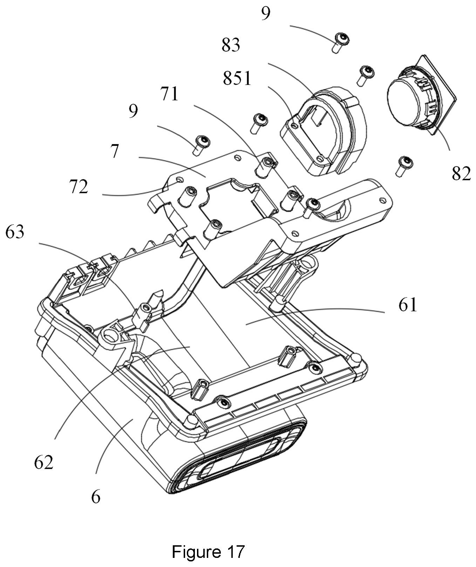

Please refer to FIG. 15 through FIG. 17, the mower 10 includes an exciter assembly 8, the main body 101, and the detection assembly 11 connected to the main body 101. The detection assembly 11 includes a housing 6, the housing 6 covers on a portion of the main body 101 to form an accommodating space 62 between the housing 6 and the main body 101, the housing 6 includes a mounting surface 61, specifically on a side of the housing 6 facing the accommodating space 62, and the exciter assembly 8 is accommodated in the accommodating space 62 and mounted in the mounting surface 61.

In some embodiments, the detection assembly 11 covers a top of the main body 101, and the accommodating space 62 is concave from a side of the detection assembly 11 close to the main body 101 toward a side away from the main body 101 to accommodate and protect the exciter assembly 8 and prevent the exciter assembly 8 from being damaged by an external force impact.

The exciter assembly 8 includes an audio exciter 82, a connecting component 81 and a fixing bracket 83, and the connecting component 81 is arranged between the audio exciter 82 and the mounting surface 61 to fix the audio exciter 82 on the mower 10 and transmits vibration generated by the audio exciter to the housing. Specifically, the audio exciter 82 is connected inside the mounting surface 61 through the connecting component 81, and the fixing bracket 83 covers an outer side of the audio exciter 82 and can restrain a movement of the audio exciter 82 relative to the mounting surface 61.

Specifically, the audio exciter 82 includes an oscillating body 821 and a base plate 823, the base plate 823 is connected to the housing 6 through the connecting component 81, the oscillating body 821 is configured to drive vibration of the base plate 823 to cause vibration of the housing and emission of sound, then drive the housing 6 to vibrate and emit sound outward.

In this embodiment, a size of the connecting component 81 is the same as a size of the bottom plate 823, so that the connecting component 81 can completely be matched with the bottom plate 823, thereby improving a connection strength between the bottom plate 823 and the housing 6. Of course, in other embodiments, the size of the connecting component 81 may be greater or less than the size of the bottom plate 823, which is not limited here.

In this embodiment, the connecting component 81 is a double-sided tape, such as a 3M double-sided tape. A first side of the double-sided tape is bonded to the mounting surface 61, and a second side of the double-sided tape is bonded to the bottom plate 823, so as to mount the audio exciter 82 on the mounting surface 61. Of course, in other embodiments, the connecting component 81 may also be a suction cup, the double-sided tape may be an ordinary double-sided tape, and the connecting component 81 may also be a connecting adhesive or other polymer with bonding effect, as long as the bottom plate 823 and may be bonded to the mounting surface, which is not limited here.

In this embodiment, two side surfaces of the connecting component 81 are flat surfaces, and surfaces of the mounting surface 61 and the bottom plate 823 close to the mounting surface 61 are also clean and uniform flat surfaces to improve a connection strength between the bottom plate 823 and the mounting surface 61. Of course, in other embodiments, the surfaces of the mounting surface 61 and the bottom plate 823 close to the mounting surface 61 may be arc-shaped, wavy or other shapes, or may be set as rough surfaces, as long as the connecting member 81 can connect the bottom plate 823 with the mounting surface 61, and can transmit a vibration effect of the bottom plate 823 to the mounting surface 61 and drive the housing 6 to vibrate, which is not limited here.

In this embodiment, in order to improve the connection strength between the audio exciter 82 and the mounting surface 61 and prevent the audio exciter 82 from falling off the mounting surface 61 during use, a fixing bracket 83 covering the outer side of the audio exciter 82 is arranged to restrain the audio exciter 82 in the mounting surface 61. Of course, in other embodiments, the fixing bracket 83 may not be arranged, and only the audio exciter 82 and the mounting surface 61 are connected through the connecting component 81, which is not limited here.

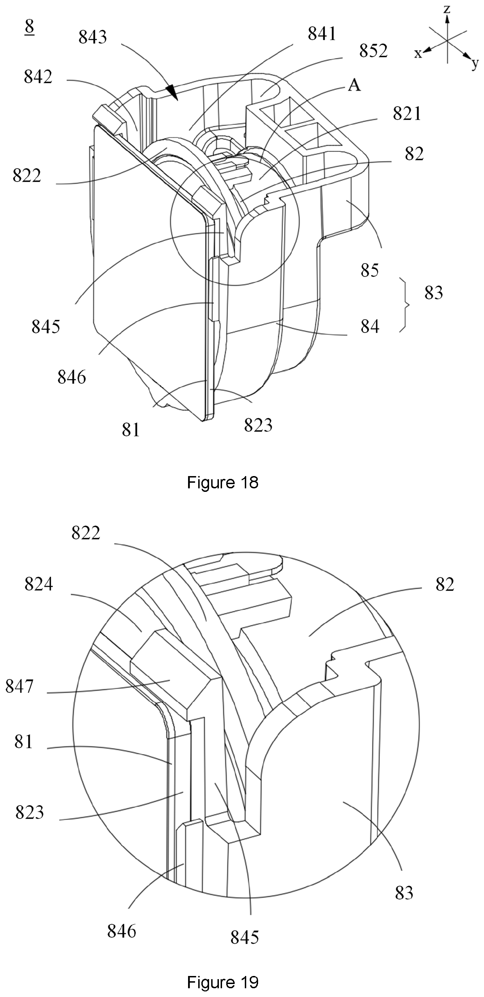

Please refer to FIG. 18 through FIG. 21, the audio exciter 82 further includes a neck part 824, and the oscillating body 821 is fixedly connected to the bottom plate 823 through the neck part 824. The fixing bracket 83 includes an accommodating cavity 841 and an abutment plate 845, the oscillating body 821 is accommodated in the accommodating cavity 841, and the abutment plate 845 is accommodated in the neck part 824 and can abut against and be fixed to the bottom plate 823. Specifically, the bottom plate 823 and the oscillating body 821 are fixedly connected to each other, the oscillating body 821 is in a cylindrical shape, and the neck part 824 is formed through being concave inward from a connection between the oscillating body 821 and the bottom plate 823, which means in an axial direction of the oscillating body 821, a thickness of the neck part 824 is greater than a thickness of the abutment plate 845. The abutment plate 845 extends into the accommodating cavity 841, which means that the abutment plate 845 covers part of the accommodating cavity 841, so that when the oscillating body 821 is accommodated in the accommodating cavity 841, the abutment plate 845 is arranged opposite to the neck part 824 and can move relative to the neck part 824.

Wherein, the fixing bracket 83 further includes an accommodating part 84, and the accommodating part 84 is configured to accommodate a part of the audio exciter 82 and restrain the audio exciter 82 to the mounting surface 61. Specifically, the accommodating part 84 is matched with the audio exciter 82, the accommodating cavity 841 is arranged in the accommodating part 84, the oscillating body 821 is accommodated in the accommodating cavity 841, and the abutment plate 845 is arranged on a side of the accommodating part 84 close to the mounting surface 61.

The fixing bracket 83 includes an opening 843 in communication with the accommodating cavity 841, and the opening 843 is configured for the oscillating body 821 to pass through. Specifically, the accommodating part 84 is in a "U"-shaped, and the accommodating cavity 841 is arranged in a middle position of the accommodating part 84. The opening 843 is arranged on a side surface of the accommodating part 84 and is communicated with the accommodating cavity 841, and a size of the opening 843 matches a size of the oscillating body 821, so that the oscillating body 821 can pass through the opening 843 and enter the accommodating cavity 841. An end of the accommodating cavity 841 away from the opening 843 is in an arc shape to match the cylindrical oscillating body 821, and the oscillating body 821 is accommodated in the accommodating cavity 841 so that a part of the oscillating body 821 can abut against a side wall of the accommodating cavity 841, and the accommodating part 84 may support the oscillating body 821. Of course, in other embodiments, the oscillating body 821 may be square, oval, irregular, etc., and the end of the accommodating cavity 841 away from the opening 843 is correspondingly square, oval, irregular, etc., which is not limited here.

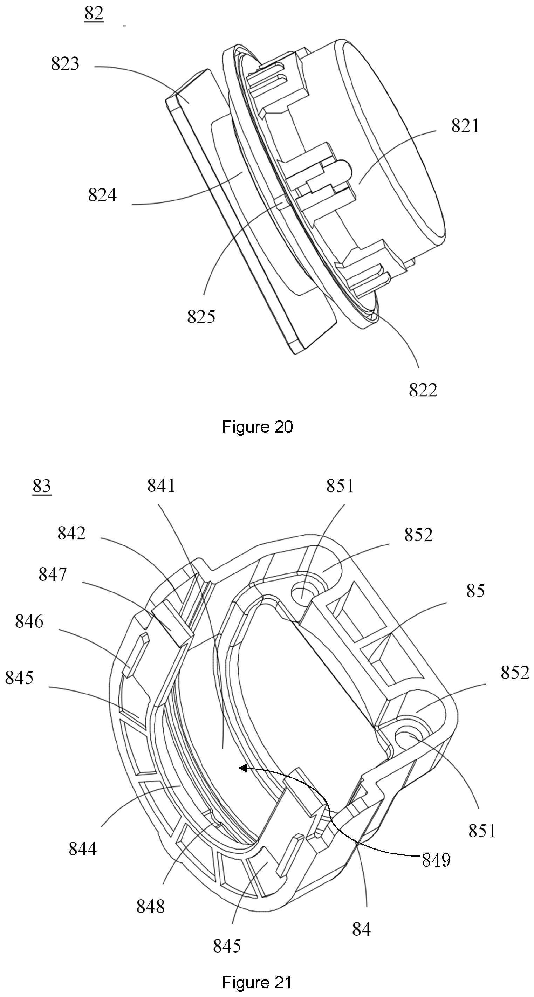

Specifically, please refer to FIG. 20 and FIG. 21. The fixing bracket 83 further includes an accommodating opening 844 enclosed by the abutment plate 845, the accommodating opening 844 is configured for the neck part 824 to pass through, the accommodating opening 844 is in communication with the opening 843 and the accommodating opening 844, the opening 843 are respectively arranged on two adjacent side surfaces of the fixing bracket 83, and the neck part 824 is accommodated in the accommodating opening 844. Specifically, the abutment plate 845 is a "U"-plate-shaped structure to be matched with the accommodating part 84, the accommodating opening 844 is communicated with the accommodating cavity 841 and is in a "U" shape corresponding to the abutment plate 845, an opening direction of the accommodating opening 844 is perpendicular to an opening direction of the opening 843, and the accommodating opening 844 is communicated with the opening 843, so that when the audio exciter 82 is assembled with the fixing bracket 83, the oscillating body 821 enters the accommodating cavity 841 through the opening 843, and the neck part 824 enters the accommodating opening 844 through the opening 843. In some embodiments, a size of the accommodating opening 844 is matched a size of the neck part 824.

**The** accommodating cavity 841 defines an accommodating groove 842, the oscillating body 821 includes a protruding part 822, the protruding part 822 is received in the accommodating groove 842, and in the axial direction of the oscillating body 821, a thickness of the protruding part 822 is less than a thickness of the accommodating groove 842, so that the protruding part 822 can move in the accommodating groove 842 and the accommodating groove 842 limits movement of the protruding part 822 in an axial direction of the oscillating body 821. Specifically, the accommodating groove 842 is formed through being concave inward from a side wall of the accommodating cavity 841, the accommodating groove 842 is arranged at an end of the accommodating cavity 841 close to the bottom plate 823, and the protruding part 822 is arranged on a side of the oscillating body 821 close to the bottom plate 823 and protrudes outward from an outer side wall of the oscillating body 821. In some embodiments, in the axial direction of the oscillating body 821, a moving distance of the abutment plate 845 relative to the neck part 824 is not greater than a moving distance of the protruding part 822 in the accommodating groove 842, so that when the abutment plate 845 abuts against the bottom plate 823, the protruding part 822 can abut against the side wall of the accommodating groove 842 or be close to the side wall of the accommodating groove 842. At the same time, the abutment plate 845 is restrained between the bottom plate 823 and the protruding part 822 to restrain a moving distance of the oscillating body 821 in the accommodating cavity 841.

In this embodiment, the oscillating body 821 includes the protruding part 822 to restrain the abutment plate 845 between the bottom plate 823 and the protruding part 822 to prevent the fixing bracket 83 from being separated from the audio exciter 82. Of course, in other embodiments, the oscillating body 821 may not be provided with the protruding part 822, and correspondingly, the accommodating groove 842 is not arranged in the accommodating cavity 841, and only the abutment plate 845 abuts against the side of the oscillating body 821 close to the bottom plate 823 to prevent the fixing bracket 83 from being separated from the audio exciter 82, which is not limited here.

Specifically, please refer to FIG. 19 combined with FIG. 21, a limiting block 847 and a protruding block 846 are arranged on a side of the abutment plate 845 facing the bottom plate 823. When the abutment plate 845 abuts against the bottom plate 823, the limiting block 847 and the protruding block 846 respectively abut against a side edge of the bottom plate 823, to form a limiting connection between the audio exciter 82 and the fixing bracket 83. Specifically, the limiting block 847 and the protruding block 846 both extend from the abutment plate 845 toward the bottom plate 823. There are two limiting blocks 847, and the two limiting blocks 847 are arranged at one end of the abutment plate 845 facing the opening 843 and respectively arranged at two ends of the U-shaped abutment plate 845. There are two protruding blocks 846, and the two protruding blocks 846 are arranged at one side of the abutment plate 845 close to the opening 843 and respectively arranged at two sides of the U-shaped abutment plate 845. Specifically, the protruding blocks 846 are arranged at a side of the abutment plate 845 away from the accommodating opening 844.

Preferably, the limiting block 847 is arranged obliquely toward one side surface of the bottom plate 823 to guide the bottom plate 823 to move when the fixing bracket 83 and the audio exciter 82 are assembled. An extending direction of the protruding block 846 is perpendicular to an extending direction of the limiting block 847. The bottom plate 823 is in a square shape. When the abutment plate 845 abuts against the bottom plate 823, both of the two limiting blocks 847 abut against a side edge of the bottom plate 823 close to the opening 843, and are matched with the oscillating body 821 accommodated in the accommodating cavity 841, so as to prevent the fixing bracket 83 from moving under an action of gravity and causing the oscillating body 821 to slide out of the accommodating cavity 841. A distance between the two protruding blocks 846 matches the size of the bottom plate 823, when the abutment plate 845 abuts against the bottom plate 823, the two protruding blocks 846 abut against the two opposite side edges of the bottom plate 823 respectively, so as to restrain the bottom plate 823 between the two protruding blocks 846, prevent the fixing bracket 83 from moving relative to the bottom plate 823, and improve abutting accuracy of the fixing bracket 83 against the bottom plate 823.

In this embodiment, the bottom plate 823 is arranged in a square shape, and both the protruding blocks 846 and the limiting blocks 847 abut against two adjacent top corner of the bottom plate 823. Of course, in other embodiments, the bottom plate 823 may be arranged in other shapes, such as a circle, a triangle, a polygon, an ellipse, etc., at this time, positions of the protruding blocks 846 and the limiting blocks 847 arranged on the abutment plate 845 may be correspondingly changed, which is not limited here.

The accommodating groove 842 defines a positioning groove 848, the protruding part 822 includes a positioning block 825, and when the oscillating body 821 is accommodated in the accommodating cavity 841, the positioning block 825 is limited and received in the positioning groove 848 to prevent further movement of the protruding part along a groove direction and to realize a positioning connection between the audio exciter 82 and the fixing bracket 83. Specifically, an arrangement position of the positioning groove 848 on the accommodating groove 842 is opposite to the opening 843, the positioning groove 848 is formed through being concave inward from the side wall of the accommodating groove 842, and a size of the positioning block 825 matches a size of the positioning groove 848, so that when the oscillating body 821 is accommodated in the accommodating cavity 841, the positioning block 825 is accommodated in the positioning groove 848, to form the positioning connection between the audio exciter 82 and the fixing bracket 83.

The audio exciter 82 is further provided with a connecting terminal (not shown), which is connected to other electronic devices to receive a signal, so that the oscillating body 821 can vibrate according to the signal, and further drive the mounting surface to vibrate to emit sound outward. The connecting terminal is electrically connected to the oscillating body 821 and connected to other electronic devices through a cable. It should be noted that, in this embodiment, the cable does not abut against other parts of the exciter assembly 8, and does not abut against the mounting surface, so as to prevent the cable from knocking against other components and generating noise when the oscillating body 821 vibrates. If the cable must abut against other components, a foam pad should be arranged at an abutment position to avoid generating noise.

Specifically, please refer to FIG. 16, FIG. 17, and FIG. 21. The fixing bracket 83 further includes a connecting part 85, the connecting part 85 and the accommodating part 84 are integrally formed, and the connecting part 85 is arranged on a side of the accommodating part 84 away from the mounting surface 61 and close to the opening 843. The connecting part 85 is configured to be fixedly connected to the housing 6. Specifically, a fixing post 71 is arranged in the housing 6, and the connecting part 85 is connected to the fixing post 71 to connect the fixing bracket 83 with the housing 6, so that on one hand, the fixing bracket 83 is prevented from falling off, and on the other hand, the audio exciter 82 is supported by the fixing bracket 83 to prevent the audio exciter 82 from falling off.

In an embodiment of the disclosure, the fixing post 71 extends from the housing 6 into the accommodating space 62, the connecting part 85 includes a guiding groove 852, the fixing post 71 extends into the guiding groove 852 and can move in the guiding groove 852, so that the fixing bracket 83 can move relative to the housing 6. Wherein, the guiding groove 852 is arranged on a side of the connecting part 85 close to the opening 843, and the guiding groove 852 is in communication with the accommodating cavity 841 and concave from the accommodating cavity 841 towards a direction away from the abutment plate 845. The guiding groove 852 is oblong slot -shaped, the fixing post 71 is cylindrical, and a diameter of the fixing post 71 is not greater than a shortest diameter of the guiding groove 852, so that the fixing post 71 can extend into the guiding groove 852 and move in the guiding groove 852. Of course, in other embodiments, a cross section of the fixing post 71 may be square or other shapes, as long as the fixing post 71 can extend into the guiding groove 852 and move in the guiding groove 852, which is not limited here.

**The** connecting part 85 is further provided with a connecting hole 851 communicated with the guiding groove 852. Specifically, the connecting hole 851 is arranged on a bottom wall of a side of the guiding groove 852 away from the accommodating part 84 and penetrates through the bottom wall, the fixing post 71 moves in the guiding groove 852 to correspond to the connecting hole 851, and an external tool is used to penetrate through the connecting hole 851 and locked with the fixing post 71 to connect the fixing bracket 83 with the fixing post 71, thereby further realizing a fixed connection between the fixing bracket 83 and the housing 6. In some embodiments, the external tool is a locking component 9.

In this embodiment, the connecting part 85 is arranged at an end of the accommodating part 84 with the opening 843(i.e., the open end), and of course, in other embodiments, the connecting part 85 may also be arranged in other directions of the accommodating part 84 according to actual conditions, or may even be arranged in a middle of the connecting part 85, which is not limited here.

In another embodiment of the disclosure, the detection assembly 11 further includes a transition component 7, and the transition component 7 is accommodated in the accommodating space 62 and connected to the housing 6. Specifically, the housing 6 includes a locking post 63 extending toward the accommodating space 62, the transition component 7 includes a through hole 72 corresponding to the locking post 63, and the locking component 9 passes through the through hole 72 to be connected to the locking post 63 to fixedly mount the transition component 7 in the housing 6.

The fixing post 71 is arranged in the housing 6. Specifically, the fixing post 71 is arranged on the transition component 7 and extending from the transition component 7 toward the accommodating space 62, so that the fixing post 71 extends into the guiding groove 852 and can move in the guiding groove 852. In other words, the connecting part 85 can be sleeved outside the fixing post 71 through the guiding groove 852, so that the fixing bracket 83 can move relative to the fixing post 71. When the exciter assembly 8 is bonded in the mounting surface 61, the connecting hole 851 is aligned with the fixing post 71, and the locking component 9 passes through the connecting hole 851 and is connected to the fixing post 71 to lock the fixing bracket 83 on the transition component 7. In some embodiments, the fixing post 71 and the locking post 63 are respectively located on two sides of the transition component 7 and are staggered to avoid a mutual interference during locking, and the locking component 9 is a screw.

Through arranging the fixing post 71, the locking component 9 is partially accommodated in the locking post 63 or the fixing post 71 during connection, to prevent the locking component 9 from puncturing the housing 6, thereby realizing an effect of a sealing, waterproof and moisture-proof of the housing 6.

In this embodiment, the detection assembly 11 further includes a detection component (not shown) accommodated in the accommodating space 62 for detecting a nearby obstacle. Wherein, the detection component and other structures of the mower 10 may be arranged according to the prior art, and details are not described herein again.

In this embodiment, the mounting surface 61 is arranged on an inner wall surface of the housing 6, and the inner wall surface is arranged in a vertical plane parallel to a forward direction of the mower 10, which means that the exciter assembly 8 is mounted on a side wall of the housing 6. Of course, in other embodiments, the exciter assembly 8 may also be mounted on the vertical plane or a top wall of the housing 6 perpendicular to the forward direction of the mower 10, which is not limited here.

A material of the housing 6 is a non-magnetic material, and the material of the housing 6 may be one of a sandwich plate with a honeycomb structure, a fine particle plate (for example, a plate made of HDF or MDF), an organic glass plate, a glass plate, a high-density foam plate, a drywall plate, glass fiber, and a glass fiber reinforced plastic plate, etc. Of course, in other embodiments, the housing 6 may be made of other materials that can provide good sound output, and which is not limited here.

In this embodiment, the mounting surface 61 is arranged beside a center of the side wall of the housing 6, and the audio exciter 82 is mounted in the mounting surface 61 to obtain a better sound output effect. Of course, in other embodiments, the mounting surface 61 may also be arranged at the center of the side wall of the housing 6, and an opening may be arranged at an edge of the side wall of the housing 6, which is not limited here.

The disclosure provides an mounting method of the exciter assembly 8 on the mower 10, and for ease of description, the axial direction of the oscillating body 821 is defined as a front-rear direction x, a direction of the opening 843 of the fixing bracket 83 is defined as an up-down direction z, and a left-right direction y is perpendicular to the front-rear direction and the up-down direction.

The mounting method includes operations S1 to S4.

In S1, the connecting component 81, the audio exciter 82 and the fixing bracket 83 are assembled and fixed to form the exciter assembly 8.

Wherein, the connecting component 81 is the 3M double-sided tape, and the double-sided tape is bonded to a side of the bottom plate 823 away from the oscillating body 821. Specifically, a surface of the bottom plate 823 for mounting is cleaned first, so that the surface is free of dust and dirt, and then one surface of the double-sided tape is bonded to the bottom plate 823 to complete a connection between the audio exciter 82 and the connecting component 81.

In this embodiment, before connection, the bottom plate 823 is cleaned to improve a bonding strength between the bottom plate 823 and the double-sided tape, and certainly, in other embodiments, a cleaning operation may also be omitted, which is not limited here.

The oscillating body 821 of the audio exciter 82 is inserted into the accommodating cavity 841 through the opening 843 of the fixing bracket 83 until the neck part 824 is accommodated in the accommodating opening 844 and the abutment plate 845 is attached to the bottom plate 823, and then the fixing bracket 83 is pushed to slide relative to the oscillating body 821, so that the abutment plate 845 is deformed until the limiting blocks 847 and the protruding blocks 846 are respectively abutted against the side edge of the bottom plate 823.

In this embodiment, when the audio exciter 82 is assembled with the fixing bracket 83, the abutment plate 845 is attached to the bottom plate 823, and when the fixing bracket 83 or the audio exciter 82 is moved, an edge of the bottom plate 823 moves along an inclined plane of the limiting block 847, so that the abutment plate 845 is deformed until the limiting blocks 847 slides over the bottom plate 823, the abutment plate 845 returns to an original shape under an action of the elastic force, and the limiting blocks 847 abut against the edge of the bottom plate. Of course, in other embodiments, when the audio exciter 82 is assembled with the fixing bracket 83, the abutment plate 845 may not be in contact with the base plate 823 which means that the abutment plate 845 moves between the protruding part 822 and the base plate 823. When the oscillating body 821 is accommodated in the accommodating cavity 841, the fixing bracket 83 is moved so that the base plate 823 is in contact with the abutment plate 845 and the edge of the base plate 823 abuts against the limiting blocks 847 and the protruding blocks 846. As long as the oscillating body 821 can be accommodated in the accommodating cavity 841, there is no limitation here.

**In** S2, the exciter assembly 8 is moved into the mower 10, so that the exciter assembly 8 and the mounting surface 61 are at a same height and arranged opposite to each other.

In S3, the exciter assembly 8 is pushed to move toward the mounting surface 61, and the audio exciter 82 is fixed in the mounting surface 61 in the mower 10 through the connecting component 81.

Specifically, the exciter assembly 8 is rotated, so that the connecting component 81 is located between the mounting surface 61 and the audio exciter 82, and is aligned with the mounting surface 61, to push the exciter assembly 8 to move toward the mounting surface 61 until a surface of the connecting component 81 away from the audio exciter 82 is bonded to the mounting surface 61.

It should be noted that, in the front-rear direction of the exciter assembly 8, thicknesses of the limiting blocks 847 and the protruding blocks 846 are less than a total thickness of the double-sided tape and the bottom plate 823, so as to prevent the limiting blocks 847 and the protruding blocks 846 from abutting against the mounting surface 61, which may result in that the bottom plate 823 cannot be closely attached to the mounting surface 61. In some embodiments, the thicknesses of the limiting blocks 847 and the protruding blocks 846 are not greater than a thickness of the bottom plate 823.

It should be noted that when the exciter assembly 8 extends into the mower 10, the fixing post 71 extends into the guiding groove 852. When the exciter assembly 8 moves toward the mounting surface 61, the fixing post 71 also moves in the guiding groove 852. When the exciter assembly 8 is bonded to the mounting surface 61, the fixing post 71 corresponds to the connecting hole 851 in the guiding groove 852.

In S4, the fixing bracket 83 and the mower 10 are locked with each other.

Specifically, the external tool (e.g., a screw, a bolt, etc.) is used to pass through the connecting hole 851 and be connected to the fixing post 71 to lock the connecting part 85 with the fixing post 71, so that the fixing bracket 83 is compressed toward the mounting surface 61, a connection strength between the audio exciter 82 and the housing 6 is improved, and an mounting of the exciter assembly 8 is further completed. Of course, in other embodiments, after the connecting part 85 is connected to the fixing post 71, there may be no compressing force between the abutment plate 845 and the bottom plate 823, and the fixing bracket 83 only functions to restrain a movement of the audio exciter 82, improve a connection stability between the audio exciter 82 and the mounted surface, and protect the audio exciter 82, which is not limited here.

In this embodiment, in S1, the connecting component 81 is first bonded to the bottom plate 823, and then the audio exciter 82 is assembled with the fixing bracket 83, so that a connection accuracy between the connecting component 81 and the bottom plate 823 can be improved. Of course, in other embodiments, the audio exciter 82 and the fixing bracket 83 may be first assembled, and then the connecting component 81 is bonded to the bottom plate 823, or the connecting component 81 may further be directly bonded to the mounting surface 61, which is not limited here.

In this embodiment, in order to facilitate a mounting of the exciter assembly 8 in the mower 10, the fixing bracket 83 and the audio exciter 82 are assembled first, and then a whole structure is moved into the mower 10 for mounting, so as to reduce an mounting movement space in the mower 10. Of course, in other embodiments, the assembly may also be performed according to following operations. First, the double-sided tape is bonded to a side of the mounting surface 61 or the bottom plate 823 away from the oscillating body 821, then the audio exciter 82 is bonded into the mounting surface 61 by the double-sided tape to complete the assembly of the audio exciter 82 and the housing 6. Then the fixing bracket 83 is moved, so that the oscillating body 821 passes through the opening 843 and enters the accommodating cavity 841. In this operation, the abutment plate 845 may be attached and moved with the bottom plate 823, and may also be moved between the bottom plate 823 and the protruding part 822, which means that the abutment plate 845 is not attached with the bottom plate 823, so as to complete a preliminary assembly of the audio exciter 82 and the fixing bracket 83. Then the fixing bracket 83 is moved in the front-rear direction and the left-right direction, so that the bottom plate 823 is restrained between the limiting blocks 847 and the protruding blocks 846 to complete the assembly of the audio exciter 82 and the fixing bracket 83. Finally, the external tool is used to pass through the connecting hole 851 and be connected to the fixing post 71, so as to fix the fixing bracket 83 on the housing 6 and complete the assembly of the fixing bracket 83, which is not limited here.

In summary, the exciter assembly 8 of the disclosure is connected to the bottom plate 823 and the mounting surface 61 through the connecting component 81 to avoid opening holes on the mower 10 and improve a sealing performance of the mower 10. Through arranging the fixing bracket 83 covering the outer side of the audio exciter 82, the connection stability between the audio exciter 82 and the mower 10 is improved, and a duration life of the audio exciter 82 is further prolonged. Through abutting the abutment plate 845 against the bottom plate 823, the connection strength between the bottom plate 823 and the mounting surface 61 is strengthened. Further, through covering the outer side of the audio exciter 82 through the fixing bracket 83, the audio exciter 82 is prevented from falling off during use, and the duration life of the audio exciter 82 is prolonged. Through arranging the exciter assembly 8 in the mower 10, the mower 10 emits sound outwards, and a practicability of the mower 10 is improved. Through arranging the transition component 7 connecting the housing 6 with the fixing bracket 83 in the mower 10, opening holes on the housing 6 is avoided, the sealing performance of the mower 10 is improved, and meanwhile, a waterproof and moisture-proof performance of the mower 10 is improved.

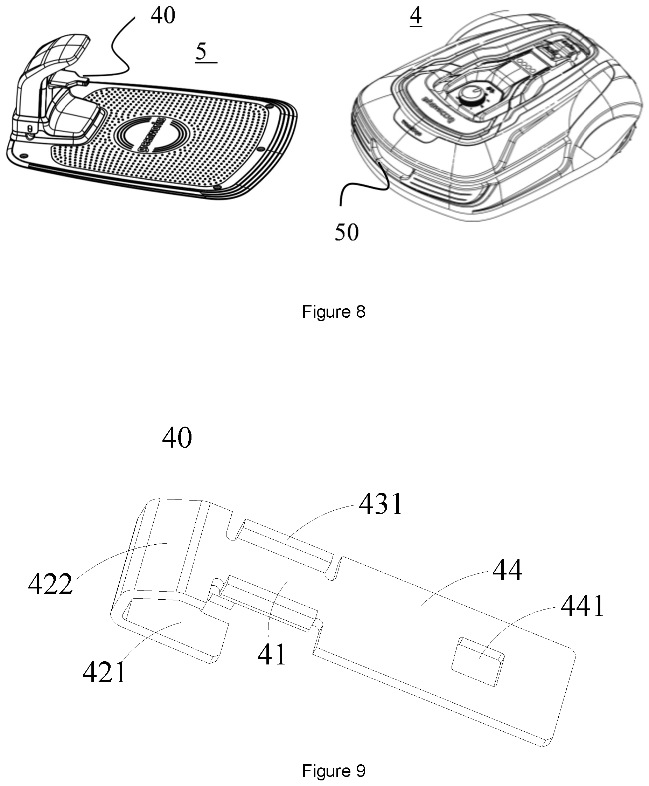

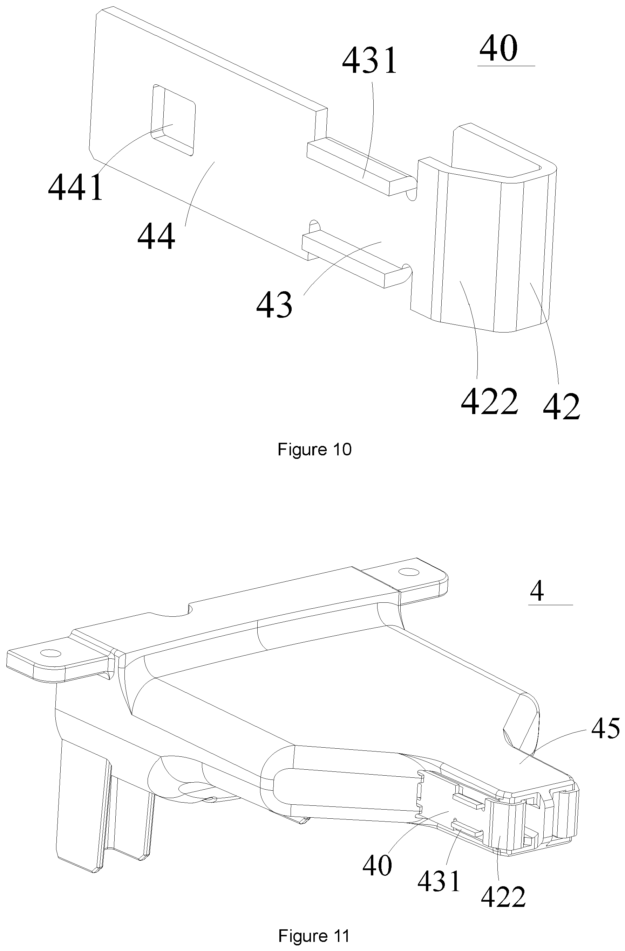

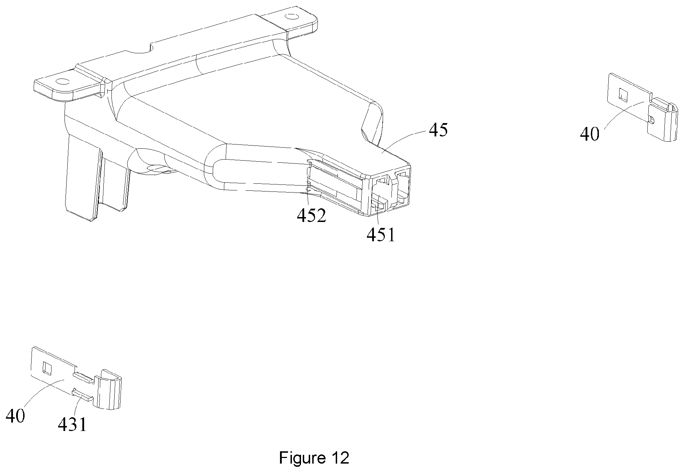

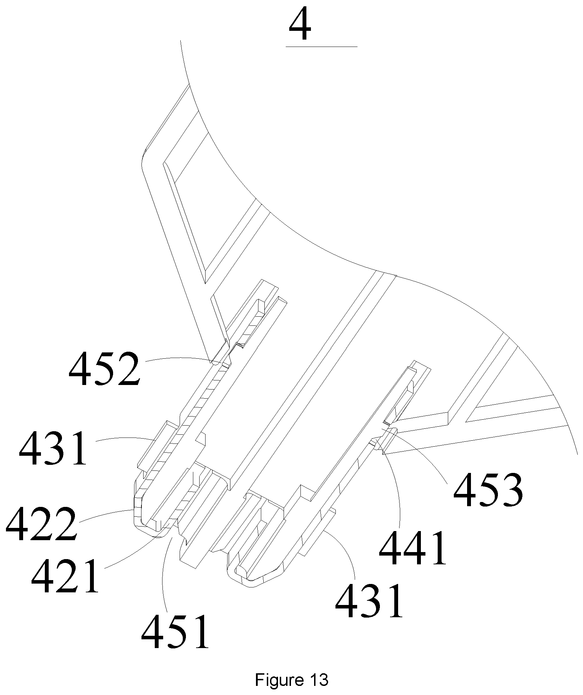

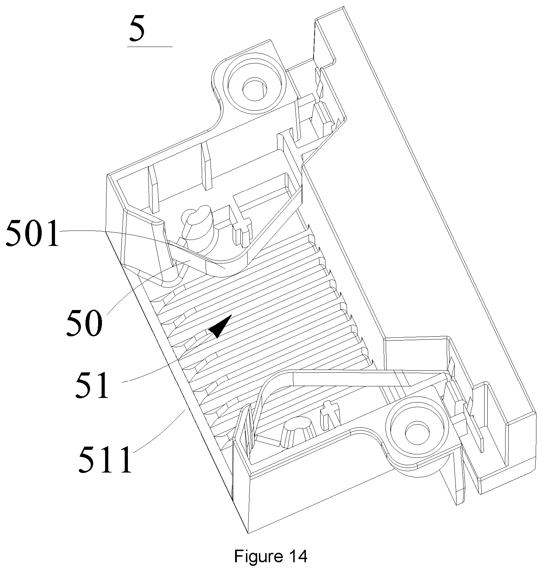

Please refer to FIG. 8 through FIG. 14, the disclosure provides the garden tool and a charging station. Wherein, the garden tool provides a mating assembly 5, the charging station provides a charging assembly 4, the mating assembly 5 and the charging assembly 4 constitute a charging coupler for connecting the garden tool with a charging device, and the mating assembly 5 and the charging assembly 4 are configured to establish a charging connection between the charging assembly 4 and the mating assembly 5 in response to the garden tool traveling to the charging device. The charging assembly 4 is located on the charging station to form a protruding portion. The mating assembly 5 is located on the mower and forms a concavity inward to be matched with the charging assembly 4.

The charging assembly 4 includes at least one first charging terminal 40, and the mating assembly includes at least one second charging terminal 50 corresponding to the first charging terminal 40. Of course, in other embodiments, the first charging terminal 40 may also be arranged on the mating assembly 5, and correspondingly, the second charging terminal 50 is arranged on the charging assembly 4, which is not limited in this disclosure.

**The** first charging terminal 40 includes at least one electrical connection surface 41, at least one conductive protrusion 431 is arranged on the electrical connection surface 41, the conductive protrusion 431 extends from the electrical connection surface 41 towards the second charging terminal 50, and the conductive protrusion 431 and the electrical connection surface 41 are arranged at an angle. When the garden tool needs to be charged, the garden tool moves back to a side of the charging device along a guiding wire, the mating assembly 5 on the garden tool is coupled with the charging assembly 4 on the charging device, which means that the first charging terminal 40 is coupled with the second charging terminal 50, and at this time, the conductive protrusion 431 arranged on the first charging terminal 40 first contacts the second charging terminal 50, so that a surface of the second charging terminal 50 may be continuously scratched, and a corrosion on the second charging terminal 50 is reduced, which reduces a risk of heat accumulation due to resistance, and improves an electrical connection effect between the first charging terminal 40 and the second charging terminal 50. And a charging effect is further improved.

In this embodiment, the charging assembly 4 includes the first charging terminal 40, and the mating assembly 5 includes the second charging terminal 50. That is, the first charging terminal 40 is arranged on the charging device, and the second charging terminal 50 is arranged on the garden tool. In other embodiments, the first charging terminal 40 may also be arranged on the mating assembly 5 of the garden tool, and the second charging terminal 50 may be arranged on the charging assembly 4 of the charging device. The disclosure is not limited thereto.

**The** first charging terminal 40 includes the at least one electrical connection surface 41, the at least one protrusion 431 is arranged on the electrical connection surface 41, the conductive protrusion 431 extends from the electrical connection surface 41 to an outer side of the charging assembly 4, and the conductive protrusion 431 and the electrical connection surface 41 are arranged at the angle. When the first charging terminal 40 is coupled with the second charging terminal 50, the conductive protrusion 431 first contacts the second charging terminal 50, so that the surface of the second charging terminal 50 is scratched, and the corrosion on the second charging terminal 50 is reduced, which reduces the risk of heat accumulation due to resistance, and improves the electrical connection effect between the first charging terminal 40 and the second charging terminal 50. And the charging effect is further improved.

Further, the first charging terminal 40 is a metal plate, and includes a head 42 and a tail 44 arranged opposite to each other and a neck 43 arranged between the head 42 and the tail 44.

**The** head 42 is bent in a direction away from the conductive protrusion 431 to form a buckling part 421, and the buckling part 421 is configured to fix the first charging terminal 40 to the charging assembly 4. The head 42 includes a guiding slope 422, the guiding slope 422 is arranged between the buckling part 421 and an electrical contacting surface, the guiding slope is arranged obliquely from the buckling part 421 toward the electrical contacting surface, and the guiding slope 422 is configured to guide coupling of the first charging terminal 40 and the second charging terminal 50.

**The** tail 44 includes a mounting part 441, and the mounting part 441 is configured to fixedly mount the first charging terminal 40 on the charging assembly 4. In this embodiment, the mounting part 441 is a fixing opening arranged on the tail 44, and a portion of the charging assembly 4 is inserted into the fixing opening to fixedly connect the first charging terminal 40 with the charging assembly 4.

**The** neck 43 and the tail 44 are arranged in a same plane, which means both the neck 43 and the tail 44 are arranged on the electrical contacting surface of the first charging terminal 40. The conductive protrusion 431 is disposed on the neck 43 of the first charging terminal 40. The conductive protrusion 431 is formed by folding an end part of the electrical connection surface 41 in a direction close to the second charging terminal 50, which means that the conductive protrusion 431 is formed by folding side edges on two sides of the electrical connection surface 41 in a direction close to the second charging terminal 50, so that the conductive protrusion 431 is a part of a structure of the first charging terminal 40, and is formed by folding, so as to improve an electrical connection effect between the first charging terminal 40 and the second charging terminal 50 without increasing cost of the first charging terminal 40. In addition, through forming the conductive protrusion 431 by folding the end part of the electrical connection surface 41 in the direction close to the second charging terminal 50, the conductive protrusion 431 may be integrally formed by stamping, thereby reducing processing cost. In other embodiments, the conductive protrusion 431 may also be fixed on the electrical connection surface 41 by welding.

Further, a projection of the conductive protrusion 431 on the electrical connection surface 41 is strip-shaped. That is, the conductive protrusion 431 is in a sharp strip shape. Since the conductive protrusion 431 itself is formed by folding the end part of the electrical connection surface 41 in the direction close to the second charging terminal 50, a thickness of the conductive protrusion 431 is a thickness of the electrical connection surface 41. In some embodiments, the thickness of the conductive protrusion 431 is from 0.9 mm to 1.1 mm, and a height of the conductive protrusion 431 protruding from the electrical connection surface 41 is from 1.4 mm to 1.6 mm. With this arrangement, the conductive protrusion 431 is a sharp edge formed by the first charging terminal 40 toward the second charging terminal 50, and the surface of the second charging terminal 50 is scratched by the conductive protrusion 431 to obtain a clean and good contact point between the first charging terminal 40 and the second charging terminal 50, so as to reduce the risk of heat accumulation due to resistance, improve the electrical connection effect between the first charging terminal 40 and the second charging terminal 50, and further improve the charging effect.

In this embodiment, two protrusions 431 are arranged on the electrical connection surface 41, the two protrusions 431 are arranged in parallel, and the two protrusions 431 are both arranged perpendicular to the electrical connection surface 41. In other embodiments, the two protrusions 431 may also be arranged at an acute angle or an obtuse angle with the electrical connection surface 41, or the two protrusions 431 are arranged non-parallel but symmetrically. Alternatively, there may be one or more protrusions 431, which is not limited in the disclosure.

Further, the first charging terminal 40 is made of a conductive material, including but not limited to copper metal, stainless steel or other similar materials.

Further, the charging assembly 4 includes a charger 45 facing outward. There are two first charging terminals 40, the two first charging terminals 40 are arranged in a mirror configuration, and the two first charging terminals 40 are arranged on two opposite side surfaces of the charger 45 of the charging assembly 4, and the side surfaces are perpendicular to a horizontal plane or at a large angle with horizontal plane. That is, the electrical connection surfaces 41 of the two first charging terminals 40 are perpendicular or substantially perpendicular to the horizontal plane.

**A** housing hole 451 is arranged at a front end of the charger 45, and the housing hole 451 is configured to accommodate the head 42 of the first charging terminal 40. The buckling part 421 of the first charging terminal 40 is inserted into the housing hole 451, and the guiding slope 422 is arranged at a corner of the front end of the charger 45 to guide the first charging terminal 40 to be coupled with the second charging terminal 50.

**An** inserting groove 452 is arranged on a side surface of the charger 45, and the tail 44 of the first charging terminal 40 is inserted into the inserting groove 452, so that the neck 43 (which means a part of the conductive protrusion 431) of the first charging terminal 40 is exposed on the side surface of the charger 45 and extends in a direction away from the side surface of the charger 45. A fixing part 453 for fixedly connecting the first charging terminal 40 is arranged on a side of the charger 45 facing the first charging terminal 40, and the fixing part 453 is inserted into the fixing opening of the first charging terminal 40 to fixedly connect the first charging terminal 40 with the charging coupling assembly.

**The** mating assembly 5 is arranged on the garden tool and includes two second charging terminals 50, the two second charging terminals 50 are arranged inside the mating assembly 5 and located on two side walls of the mating assembly 5, and the two second charging terminals 50 are arranged in a mirror configuration.

Further, the mating assembly 5 includes a groove with two side walls that are substantially perpendicular to a mowing surface of the garden tool. One second charging terminal 50 is arranged on each side wall of the groove. The second charging terminal 50 is an elastic second charging terminal 50, in some embodiments, the elastic second charging terminal 50 is a conductive elastic piece, the conductive elastic piece is approximately rectangular, a height of the rectangular conductive elastic piece extends substantially parallel to the side wall, and a width of the conductive elastic piece extends along the side wall.

Each conductive elastic piece is fixed on a rear wall of the groove and a side wall of a front of the groove, the conductive elastic piece is substantially arc-shaped between two fixing points, and an arc-shaped part protrudes into the groove, which means that the two arc-shaped conductive elastic pieces are bent away from each other to form two contacting parts 501. A distance between the two contacting parts 501 is less than the distance between the two first charging terminals 40. The two arc-shaped conductive elastic pieces enable the two elastic second charging terminals 50 to define a flared channel 51 between the two elastic second charging terminals 50, a spacing of an inner portion of the channel 51 is smaller than a distance between two adjacent first charging terminals 40, and the channel 51 includes an opening 511. The channel 51 includes a first end (which means an inlet of the channel 51) close to the opening 511 and a second end away from the opening 511, a width of the first end is greater than the distance between the two first charging terminals 40, and a width of the second end is less than the distance between the two first charging terminals 40. This arrangement facilitates a connection with the charging assembly 4. When the charging assembly 4 is inserted into the channel 51, since the width of the first end is greater than the distance between the two first charging terminals 40, the charger 45 easily enters the channel 51. When the charger 45 continues to enter the channel 51, since the width of the second end is less than the distance between the two first charging terminals 40, the two protrusions 431 of the two first charging terminals 40 facing the second charging terminal 50 are in contact with the contacting part 501 of the second charging terminal 50 to scrape off the corrosion on the second charging terminal 50, which reduces the risk of heat accumulation due to resistance, and improves the electrical connection effect between the first charging terminal 40 and the second charging terminal 50. At this time, the contacting parts 501 of the two elastic second charging terminals 50 on the mating assembly 5 are compressed and elastically bounced backward by the first charging terminal 40, which gives room for the first charging terminal 40. Under an elastic restoring force, a pressure of the contacting parts 501 on the first charging terminal 40 is maintained, which ensues a tighter contact between the conductive protrusion 431 and the contacting part 501, thereby enhancing the electrical connection effect.

**A** height of the conductive elastic piece in the second charging terminal 50 (which means a height in a direction parallel to the side wall of the groove) is from 3 mm to 15 mm, preferably from 4 mm to 12 mm, and more preferably from 5 mm to 10 mm. A thickness of the conductive protrusion 431 in the first charging terminal 40 (which means a thickness of a metal plate of the first charging terminal 40) is from 0.5 mm to 4 mm, preferably from 0.5 mm to 3 mm, and more preferably from 0.7 mm to 1.5 mm.

Further, since one or more protrusions 431 may be arranged, when the first charging terminal 40 is in contact with the second charging terminal 50, a current may be allowed to be conducted to the second charging terminal 50 through a plurality of protrusions 431, thereby improving an efficient conduction of the current between the garden tool and the charging device.

Further, each first charging terminal 40 includes at least one electrical contact point when coupled and in contact with the corresponding second charging terminal 50, and the electrical contact point is generated by a contact between the conductive protrusion 431 and the second charging terminal 50. Since the conductive protrusion 431 protrudes toward the second charging terminal 50, the conductive protrusion 431 first contacts the second charging terminal 50 to generate an electrical contact point, and the electrical contact point is scraped by the conductive protrusion 431, which is cleaner and has a better current conduction effect.

**Since** the second charging terminal 50 is arranged on the garden tool (for example, on the mower) and the first charging terminal 40 is arranged on the charging device, when the garden tool is automatically connected to the charging device for charging, each connection of the mating assembly 5 of the garden tool and the charging assembly 4 of the charging device may not be identical. This means that sometimes the mating assembly 5 and the charging assembly 4 are inserted in parallel, so that each protrusion 431 on the first charging terminal 40 on the two sides may be in contact with the second charging terminal 50, which means that a plurality of electrical contact points is arranged on each side. Sometimes, the mating assembly 5 and the charging assembly 4 are in non-parallel contact (which means that the mating assembly 5 and the charging assembly 4 are obliquely inserted), so that only one protrusion 431 on the first charging terminal 40 on each side is in contact with the second charging terminal 50 to form the electrical contact point. However, no matter how connected, it is always ensured that there is at least one electrical contact point between each pair of first charging terminal 40 and the second charging terminal 50, and the electrical contact point is formed by a scraping contact between the conductive protrusion 431 and the second charging terminal 50.

Further, in this embodiment, each first charging terminal 40 includes two protrusions 431, which means that the charging assembly 4 includes four protrusions 431 to be connected to the second charging terminal 50 of the mating assembly 5. This arrangement enables the garden tool to be more easily separated from the charging device after a charging is completed, and reduces a force required for the garden tool separated from the charging device.

**The** first charging terminal 40 of the disclosure includes a simple structure. The at least one protrusion 431 is arranged on the electrical connection surface 41. The conductive protrusion 431 is formed through extending from the electrical connection surface 41 toward the second charging terminal 50, and the conductive protrusion 431 is arranged at the angle to the electrical connection surface 41, so that when the first charging terminal 40 is coupled with the second charging terminal 50, the conductive protrusion 431 first contacts the second charging terminal 50, the surface of the second charging terminal 50 is continuously scratched, and the corrosion on the second charging terminal 50 is reduced, which reduces the risk of heat accumulation due to resistance, and improves the electrical connection effect between the first charging terminal 40 and the second charging terminal 50, thereby further improving the charging effect.

It will be apparent to those skilled in the art that the disclosure is not limited to details of the above exemplary embodiments, and that the disclosure can be implemented in other specific forms without departing from the disclosure.

Although the application has been described in detail with reference to the preferred embodiments, those skilled in the art should understand that technical solutions of the application may be modified or equivalently replaced without departing from the application.

## Claims

1. A control method of a garden tool, comprising:
controlling the garden tool to move along a preset path (31) within a working area (30);
detecting an obstacle (20) in a moving direction of the garden tool;
obtaining a speed of the obstacle (20);
controlling the garden tool to stop at a preset distance from the obstacle (20) when the speed of the obstacle (20) is greater than zero;
continuing detection of the obstacle (20) in the moving direction of the garden tool; and
controlling the garden tool to move along the preset path (31) when a preset event is detected within a preset time.

2. The control method of the garden tool according to claim 1, wherein
the preset event comprises the obstacle (20) moving to a first position, and the first position is not on a remaining portion of the preset path (31).

3. The control method of the garden tool according to claim 1, further comprising:
determining whether the obstacle (20) is located within the working area (30) when the obstacle (20) is detected,
obtaining the speed of the obstacle (20) when the obstacle (20) is located within the working area (30), and
ignoring the obstacle (20) when the obstacle (20) is located outside the working area (30).

4. The control method of the garden tool according to claim 3, further comprising:
detecting a distance between the garden tool and the obstacle (20) when the obstacle (20) is detected, and
determining whether the obstacle (20) is located within the working area (30) based on a positioning of the garden tool, the moving direction, the distance between the garden tool and the obstacle (20), and a boundary of the working area (30).

5. The control method of the garden tool according to claim 1, wherein
when the preset event is detected within the preset time, and the garden tool is controlled to move along the preset path (31), a walking speed of the garden tool is less than a normal speed of the garden tool.

6. The control method of the garden tool according to claim 5, wherein
after the gardening tool walks another preset distance or for a preset period of time, the walking speed of the garden tool returns to be the normal speed.

7. The control method of the garden tool according to claim 1, further comprising:
when the preset event is not detected within the preset time, controlling the garden tool to bypass the preset path (20); and
controlling the garden tool to return to the preset path (31) and walk along the preset path (31).

8. The control method of the garden tool according to claim 7, wherein
when the garden tool bypasses the obstacle (20), the obstacle (20) is not collided.

9. The control method of the garden tool according to claim 1, further comprising:
when the speed of the obstacle (20) is zero,
reducing the speed of the garden tool,
colliding with the obstacle (20),
bypassing the obstacle (20), and
controlling the garden tool to return to the preset path (31).

10. The control method of the garden tool according to claim 1, wherein
after the garden tool collides with the obstacle (20), the garden tool stops steering.

11. The control method of the garden tool according to claim 9, further comprising:
after colliding with the obstacle (20), controlling the garden tool to make an arc-shaped movement to bypass the obstacle (20).

12. The control method of the garden tool according to claim 1, wherein
the garden tool comprises a detection assembly for detecting obstacles (20), the detection assembly comprising one or a combination of a visual detection assembly, a radar detection assembly, an ultrasonic detection assembly, and an infrared detection assembly.

13. A garden tool, comprising:
a main body (101);
a walking assembly (102), mounted to a bottom portion of the main body (101);
a detection assembly (11), mounted on the main body (101), the detection assembly (11) is configured to detect an obstacle (20) in a moving direction of the garden tool, a speed of the obstacle (20), and a distance between the obstacle (20) and the garden tool; and
a control unit (13), coupled to the walking assembly (102) and the detection assembly (11),
wherein the control unit (13) is configured to:
control the garden tool to move along a preset path (31) within a defined working area (30), and receive a detection result of the detection assembly (11);
stop the garden tool at a preset distance from the obstacle (20) when the speed of the obstacle (20) is greater than 0;
continue detection of the obstacle (20) in the moving direction of the garden tool; and
control the garden tool to resume movement along the preset path (31) when a preset event is detected within a preset time.

14. The garden tool according to claim 13, further comprising:
a storage unit (14), configured to store a working area map and a control program of the garden tool.

15. The garden tool according to claim 13, further comprising:
a positioning unit (15), configured to position the garden tool based on a satellite navigation signal.

16. The garden tool according to claim 13, further comprising:
a path planning unit (12), configured to plan a path based on the working area map of the garden tool.

17. The garden tool according to claim 13, further comprising:
a housing (6) defining a mounting surface (61); and
an exciter assembly (8) mounted within the mounting surface (61),
the exciter assembly (8) comprising:
an audio exciter (82),
a connecting component (81), and a fixing bracket (83),
wherein the connecting component (81) is arranged between the audio exciter (82) and the mounting surface (61) to fix the audio exciter (82) on the garden tool, the fixing bracket (83) covers an outer side of the audio exciter (82) and restrains movement of the audio exciter (82) relative to the mounting surface (61).

18. The garden tool according to claim 17,
wherein the audio exciter (82) comprises an oscillating body (821) and a base plate (823),
the base plate (823) being mounted to the housing (6) through the connecting component (81),
and the oscillating body (821) being configured to drive vibration of the base plate (823) to cause vibration of the housing (6) and emission of sound.

19. The garden tool according to claim 18,
wherein the audio exciter (82) further comprises a neck body (824) fixedly connecting the oscillating body (821) and the base plate (823), and the fixing bracket (83) comprises an accommodating cavity (841) receiving the oscillating body (821) and an abutment plate (845) disposed opposite to the neck body (824) and abutting against the base plate (823).

20. The garden tool according to claim 19,
wherein the fixing bracket (83) comprises an opening (843) in communication with the accommodating cavity (841), and the opening (843) is configured for the oscillating body (821) to pass through.

21. The garden tool according to claim 20,
wherein the fixing bracket (83) further comprises an accommodating opening (844) enclosed by the abutment plate (845), the accommodating opening (844) is configured for the neck part (824) to pass through, the accommodating opening (844) is in communication with the opening (843) and respectively arranged on two adjacent side surfaces of the fixing bracket (83).

22. The garden tool according to claim 19,
wherein the accommodating cavity (841) defines an accommodating groove (842),
the oscillating body (821) comprises a protruding part (822) received in the accommodating groove (842), and in an axial direction of the oscillating body (821), a thickness of the protruding part (822) is less than a thickness of the accommodating groove (842) to allow a movement of the protruding part (822) in the accommodating groove (842).

23. The garden tool according to claim 22,
wherein the accommodating groove (842) defines a positioning groove (848), the protruding part (822) comprises a positioning block (825), when the oscillating body (821) is accommodated in the accommodating cavity (841), the positioning block (825) is accommodated in the positioning groove (848) to achieve a positioning connection between the audio exciter (82) and the fixing bracket (83).

24. The garden tool according to claim 19,
wherein a limiting block (847) and a protruding block (846) are arranged on a side of the abutment plate (845) facing the bottom plate (823), when the abutment plate (845) abuts against the bottom plate (823), the limiting block (847) and the protruding block (846) respectively abut against a side edge of the bottom plate (823), to form a limiting connection between the audio exciter (82) and the fixing bracket (83).

25. The garden tool according to claim 17,
wherein the connecting component (81) is a double-sided tape.

26. The garden tool according to claim 17,
wherein the fixing bracket (83) further comprises an accommodating part (84) and a connecting part (85), the accommodating part (84) is configured to accommodate a part of the audio exciter (82) and restrain the audio exciter (82) to the mounting surface (61), the housing (6) comprises a fixing post (71), the connecting part (85) is coupled to the fixing post (71) to couple the fixing bracket (83) to the housing (6).

27. The garden tool according to claim 26,
the connecting part (85) comprises a guiding groove (852), the fixing post (71) extends into the guiding groove (852) and is movable in the guiding groove (852), so as to enable the fixing bracket (83) to move relative to the housing (6).

28. A method to mount an exciter assembly on a garden tool, comprising:
S1, assembling a connecting component (81), an audio exciter (82) and a fixing bracket (83) to form the exciter assembly (8);
S2, moving the exciter assembly (8) into a garden tool, and positioning the exciter assembly (8) at a same height as the mounting surface (61) and relative to the mounting surface (61);
S3, pushing the exciter assembly (8) to move towards the mounting surface (61), and fix the audio exciter (82) on the mounting surface (61) in the garden tool through the connecting component (81); and
S4, fixing the fixing bracket (83) with the garden tool.

29. The method according to claim 28,
wherein in S1, the audio exciter (82) is inserted into the accommodating cavity (841) through the opening (843) of the fixing bracket (83) until the neck part (824) is accommodated in the accommodating opening (844) and the abutment plate (845) is attached to the bottom plate (823), and then the fixing bracket (83) is pushed to slide relative to the oscillating body (821) to enable the abutment plate (845) to be deformed until the limiting blocks (847) and the protruding blocks (846) are respectively abutted against a side edge of the bottom plate (823).

30. The method according to claim 28,
wherein in S4, the connecting component (81) is a double-sided tape, and the audio exciter (82) is bonded to the mounting surface (61) through the double-sided tape.

31. A charging coupler, configured to couple a robotic garden tool to a charging device, comprising a charging assembly (4) and a mating assembly (5), the charging assembly (4) and the mating assembly (5) being configured to establish an electrical charging connection between the charging assembly (4) and the mating assembly (5) in response to the robotic garden tool moving onto the charging device, wherein one of the charging assembly (4) and the mating assembly (5) comprises at least one first charging terminal (40) and the other of the charging assembly (4) and the mating assembly (5) comprises at least one second charging terminal (50) electrically mateable with the first charging terminal (40), the first charging terminal (40) comprises at least one conductive protrusion (431) formed through extending from the first charging terminal (40) to an outer side of the charging assembly (4).

32. The charging coupler according to claim 31,
wherein the at least one conductive protrusion (431) is formed through bending an end part of the first charging terminal (40).

33. The charging coupler according to claim 31,
wherein two conductive protrusions (431) are arranged on the first charging terminal (40), and the two conductive protrusions (431) are arranged in parallel or symmetrically.

34. The charging coupler according to claim 31,
wherein the first charging terminal (40) comprises a head (42), a neck (43), and a tail (44), the neck (43) is arranged between the head (42) and the tail (44), and the conductive protrusion (431) extends in a direction perpendicular to a surface of the neck.

35. The charging coupler according to claim 34,
wherein the head (42) defines a guiding slope (422), the guiding slope (422) is configured to guide coupling of the first charging terminal (40) and the second charging terminal (50), and a buckling part (421) is formed on the head (42).

36. The charging coupler according to claim 34,
wherein the tail (44) comprises a mounting part (141), and the mounting part (141) is configured to fixedly mount the first charging terminal (40) on the charging assembly (4).

37. The charging coupler according to claim 31,
wherein the charging assembly (4) is arranged on the charging device, and the mating assembly (5) is arranged on the robotic garden tool.

38. The charging coupler according to claim 31,
wherein each first charging terminal (40) and the corresponding second charging terminal (50) have at least one electrical contact point when coupled and in contact with each other.

39. The charging coupler according to claim 31,
wherein the charging coupler comprises two symmetrical first charging terminals (40) and two symmetrical second charging terminals (50).

40. The charging coupler according to claim 31,
wherein the second charging terminal (50) is flexible and the two second charging terminals (50) define a channel (51), the channel (51) comprises a first end and a second end, a width of the first end is greater than a distance between the two first charging terminals (40), and a width of the second end is smaller than the distance between the two first charging terminals.
